# EUROPEAN PATENT SPECIFICATION

(11) **EP 3 285 318 B1**
(45) Date of publication and mention of the grant of the patent: **07.08.2019**
(21) Application number: 16779753.9
(22) Date of filing: 07.04.2016
(51) Int. Cl.: H01M 8/0245, H01M 8/16, H01M 8/22, H01M 4/86, C02F 3/34, H01M 8/02, H01M 4/88, H01M 4/90

(54) **ELECTRODE STRUCTURE AND MICROBIAL FUEL CELL**
ELEKTRODENSTRUKTUR UND MIKROBIELLE BRENNSTOFFZELLE
STRUCTURE D'ÉLECTRODE ET PILE À COMBUSTIBLE MICROBIENNE

(30) Priority: 13.04.2015 JP 2015081446
(43) Date of publication of application: 21.02.2018
(73) Proprietor: Panasonic Corporation, Kadoma-shi, Osaka 571-8501 (JP)
(72) Inventor: KAMAI, Ryo, Osaka-shi Osaka 540-6207 (JP); YOSHIKAWA, Naoki, Osaka-shi Osaka 540-6207 (JP); KITADE, Yuuki, Osaka-shi Osaka 540-6207 (JP)
(74) Representative: Müller-Boré & Partner Patentanwälte PartG mbB
(86) International application number: PCT/JP2016/001944
(87) International publication number: WO 2016/166956

(56) References cited:
- WO-A2-2014/022328
- JP-A- 2011 065 822
- JP-A- 2011 065 822
- JP-A- 2011 527 817
- JP-A- 2012 507 828
- JP-A- 2015 041 477
- JP-A- 2015 041 477
- US-A1- 2007 259 217
- US-A1- 2008 292 912
- XIAOYUAN ZHANG ET AL: "The use of nylon and glass fiber filter separators with different pore sizes in air-cathode single-chamber microbial fuel cells", ENERGY & ENVIRONMENTAL SCIENCE, vol. 3, no. 5, 22 March 2010 (2010-03-22), pages 659-664, XP055207776, ISSN: 1754-5692, DOI: 10.1039/b927151a
- CARLO SANTORO ET AL: "Effects of gas diffusion layer (GDL) and micro porous layer (MPL) on cathode performance in microbial fuel cells (MFCs)", INTERNATIONAL JOURNAL OF HYDROGEN ENERGY, ELSEVIER SCIENCE PUBLISHERS B.V., BARKING, GB, vol. 36, no. 20, 10 August 2011 (2011-08-10), pages 13096-13104, XP028295288, ISSN: 0360-3199, DOI: 10.1016/J.IJHYDENE.2011.07.030 [retrieved on 2011-07-26]
- JINCHENG WEI ET AL: "Recent progress in electrodes for microbial fuel cells", BIORESOURCE TECHNOLOGY, ELSEVIER BV, GB, vol. 102, no. 20, 9 July 2011 (2011-07-09) , pages 9335-9344, XP028290071, ISSN: 0960-8524, DOI: 10.1016/J.BIORTECH.2011.07.019 [retrieved on 2011-07-19]

## Description

The present invention relates to an electrode structure and a microbial fuel cell. Specifically, the present invention relates to an electrode structure capable of purifying wastewater and generating electric energy and a microbial fuel cell including the same.

In recent years, microbial fuel cells which use biomass to generate electric power are attracting attention as sustainable energy. Microbial fuel cells are devices that use microorganisms' metabolic ability to transform organic matters and the like to electric energy and are excellent systems capable of recovering energy while treating organic matters. However, microorganisms generate very small electricity, resulting in low current density. Microbial fuel cells therefore need further improvements.

One of such microbial fuel cells conventionally disclosed uses a cathode that includes a laminate of a diffusion layer, a catalyst layer composed of activated carbon and carbon black, and an electric conductor composed of stainless steel mesh (see Non Patent Literature 1, for example). In this microbial fuel cell, the diffusion layer is disposed so as to be in contact with air, and the electric conductor is disposed so as to be in contact with a liquid to be treated. The activated carbon acts as a catalyst that reduces oxygen in air. Carbon black provided on the surface of the activated carbon increases the electron conduction to improve the effect of the activated carbon. In such a microbial fuel cell, microorganisms to decompose organic matters in the liquid to be treated are supported on the anode or float in the liquid to be treated.

Non Patent Literature 1: Xiaoyouan Zhang, four others, "Environmental Science & Technology", (USA), 2014, Vol. 48, p. 2075-2018

US 2007/0259217 A1 describes materials and configurations for scalable microbial fuel cells. Xiaoyuan Zhang et al., Energy Environ. Sci., 2010, vol. 3, no. 5, pages 659 to 664, describe the use of nylon and glass fiber filter separators with different pore sizes in air-cathode single-chamber microbial fuel cells. Carlo Santoro et al., International Journal of Hydrogen Energy, 2011, vol. 36, no. 20, pages 13096 to 13104, describe the effects of a gas diffusion layer and a microporous layer on cathode performance in microbial fuel cells.

Herein, in the microbial fuel cell of Non Patent Literature 1, the activated carbon constituting the catalyst layer have large particle size, and gaps formed between the activated carbon particles are larger than microorganisms in the liquid to be treated. Accordingly, microorganisms can pass through the electric conductor and catalyst layer and reach the diffusion layer. Over time, such microorganisms adhere to the diffusion layer to form a biofilm. The microorganisms adhering to the catalyst and diffusion layers breath and consume oxygen in air. Moreover, the microorganisms adhering to the diffusion layer degrade the water repellency thereof, reducing diffusion of oxygen to the catalyst layer. Accordingly, the catalyst layer is not supplied with sufficient oxygen, resulting in reduction in volume of oxygen reduction reaction on the catalyst layer. Moreover, the potential at the cathode decreases with a rise in the concentration overvoltage due to the reduction in concentration of the supplied oxygen. Moreover, the microorganisms adhering to the catalyst layer and secretion thereof poisons catalyst active sites in the catalyst layer, reducing the power generation performance of the microbial fuel cell.

The present invention was made in the light of the problems included in the conventional techniques. An object of the present invention is to provide an electrode structure capable of preventing reduction in power generation performance and producing electric energy stably and a microbial fuel cell using the same.

An electrode structure according to a first aspect of the present invention includes: a water-repellent layer which is permeable to oxygen; and an electric conductor layer which is laid on the water-repellent layer and holds an oxygen reduction catalyst. The electrode structure further includes a filter layer which is laid on a surface of the electric conductor layer on the opposite side to the surface on which the water-repellent layer is laid, the filter layer including a plurality of through holes having a diameter of 0.01 µm to 0.5 µm, wherein the filter layer is an aggregation of a plurality of particles of a carbon material.

An electrode structure according to a second aspect of the present invention includes: a water-repellent electric conductor layer which is water-repellent and holds an oxygen reduction catalyst, wherein the water-repellent electric conductor layer is composed of a porous body including voids so as to diffuse gas; and a filter layer which is laid on the water-repellent electric conductor layer and includes a plurality of through holes having a diameter of 0.01 µm to 0.5 µm, wherein the filter layer is an aggregation of a plurality of particles of a carbon material.

An electrode structure according to a third aspect of the present invention includes: a water-repellent layer which is permeable to oxygen; a filter layer which is laid on the water-repellent layer and includes a plurality of through holes having a diameter of 0.01 µm to 0.5 µm, wherein the filter layer is an aggregation of a plurality of particles of a carbon material, and an oxygen reduction catalyst is held in the filter layer; and an auxiliary electric conductor provided for the filter layer, wherein at least a part of the auxiliary electric conductor is provided within the filter layer, or the auxiliary electric conductor is provided so as to be in contact with a surface of the filter layer on an opposite to a surface, which is on the water-repellent layer side.

A microbial fuel cell according to a fourth aspect of the present invention includes: an anode supporting microorganisms; and a cathode composed of one of the aforementioned electrode structure.
Fig. 1 is a schematic cross-sectional view illustrating an example of an electrode structure according to a first embodiment of the present invention.
Fig. 2 is a schematic cross-sectional view illustrating another example of the electrode structure according to the first embodiment of the present invention.
Fig. 3 is a schematic cross-sectional view illustrating an example of an electrode structure according to a second embodiment of the present invention.
Fig. 4 is a schematic cross-sectional view illustrating another example of the electrode structure according to the second embodiment of the present invention.
Fig. 5 is a schematic cross-sectional view illustrating an example of an electrode structure according to a third embodiment of the present invention.
Fig. 6 is a schematic cross-sectional view illustrating another example of the electrode structure according to the third embodiment of the present invention.
Fig. 7 is a schematic cross-sectional view illustrating an example of an electrode structure according to a fourth embodiment of the present invention.
Fig. 8 is a schematic cross-sectional view illustrating another example of the electrode structure according to the fourth embodiment of the present invention.
Fig. 9 is a perspective view illustrating a microbial fuel cell according to an embodiment of the present invention.
Fig. 10 is a cross-sectional view along a line A-A in Fig. 9.
Fig. 11 is an exploded perspective view illustrating a fuel cell unit of the microbial fuel cell.
Fig. 12 is a graph illustrating a relationship between output power retention rate and time concerning microbial fuel cells of Examples 1-1 and 1-2 (Reference Examples) and Comparative example 1-1.
Fig. 13 is a graph illustrating a relationship between output power density and operation days concerning microbial fuel cells of Examples 2-1 to 2-5 (Reference Examples) and Comparative example 2-1.
Fig. 14 is a graph illustrating a relationship between steady output power and operation days concerning microbial fuel cells of Example 3-1 and Comparative example 3-1.
Fig. 15 is a scanning electron micrograph illustrating an electrode structure used in the microbial fuel cell of Example 3-1.
Fig. 16 is an enlarged scanning electron micrograph illustrating the electrode structure used in the microbial fuel cell of Example 3-1.

Hereinafter, a description is given of electrode structures according to embodiments and microbial fuel cells using the same in detail. The dimensional proportions in the drawings are exaggerated for convenience and are different from actual proportions in some cases.

### [Electrode structure]

### (First embodiment)

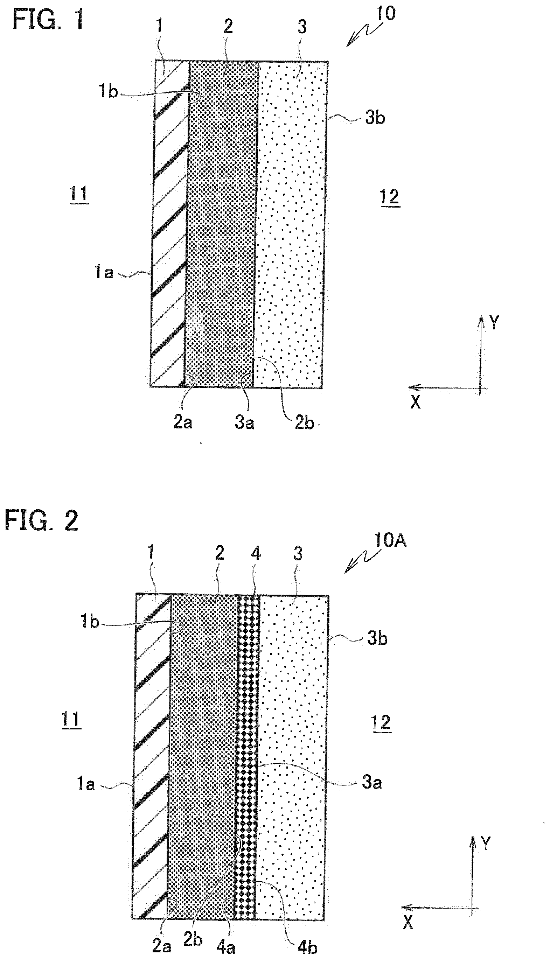

As illustrated in FIG. 1, an electrode structure 10 according to the first embodiment includes: a water-repellent layer 1 which is permeable to oxygen; an electric conductor layer 2 laid on the water-repellent layer 1; and a filter layer 3 which is laid on a surface 2b of the electric conductor layer 2, on the opposite side to a surface 2a on which the water-repellent layer 1 is laid. The filter layer 3 includes plural through holes. Specifically, in the electrode structure 10, the electric conductor layer 2 is laid on the water-repellent layer 1 so that the surface 2a of the electric conductor layer 2 is in contact with a surface 1b of the water-repellent layer 1, and the filter layer 3 is laid on the electric conductor layer 2 so that a surface 1a of the filter layer 3 is in contact with the surface 2b of the electric conductor layer 2, on the opposite side to the surface 2a. When the electrode structure 10 is used in a microbial fuel cell or a water treatment apparatus, at least a part of the surface 1a of the water-repellent layer 1 is exposed to a gas phase 11 while the surface 3b of the filter layer 3 is in contact with a liquid 12 to be treated.

### <Water-repellent layer>

As illustrated in FIG. 1, in the electrode structure 10, the water-repellent layer 1 is provided on the surface 2a of the electric conductor layer 2. The water-repellent layer 1 is water-repellent and separates the liquid 12 to be treated as a liquid phase from the gas phase 11. By providing the water-repellent layer 1, the liquid 12 to be treated is prevented from moving toward the gas phase 11. "To separate" herein refers to "to physically shut off.

The water-repellent layer 1 is in contact with the gas phase 11 including oxygen and diffuses gas in the gas phase 11. In the configuration illustrated in FIG. 1, the water-repellent layer 1 supplies gas to the surface 2a of the electric conductor layer 2 substantially uniformly. The water-repellent layer 1 is preferably composed of a porous body so as to diffuse the gas. Since the water-repellent layer 1 repels water, it is possible to prevent pores of the porous body from being clogged due to dew condensation and the like to reduce diffusion of gas. Moreover, it is difficult for the liquid 12 to be treated to penetrate the water-repellent layer 1. Accordingly, oxygen can efficiently permeate from the surface 1a of the water-repellent layer 1 in contact with the gas phase 11, to the surface 1b facing the electric conductor layer 2.

The water-repellent layer 1 is preferably porous. The material constituting the water-repellent layer 1 is not particularly limited as long as the material is water-repellent and allows gas in the gas phase 11 to diffuse. The material constituting the water-repellent layer 1 can be at least one selected from the group consisting of polyethylene, polypropylene, polybutadiene, nylon, polytetrafluoroethylene (PTFE), ethyl cellulose, poly-4-methylpentene-1, butyl rubber, and polydimethylsiloxane (PDMS), for example. These materials are easily formed into a porous body and are highly water-repellent, thus preventing the pores from being clogged and increasing gas diffusion. The water-repellent layer 1 preferably includes plural through holes in a stacking direction X of the water-repellent layer 1 and electric conductor layer 2.

To improve the water-repellency, the water-repellent layer 1 may be treated with water-repellent finishing using a water-repellent when needed. Specifically, the water-repellency is improved by applying a water-repellent, such as polytetrafluoroethylene (PTFE), to the porous body constituting the water-repellent layer 1.

In the electrode structure 10 illustrated in FIG. 1, to efficiently supply gas to the surface 2a of the electric conductor layer 2, the water-repellent layer 1 is preferably bonded to the electric conductor layer 2 with an adhesive. In other words, the surface 1b of the water-repellent layer 1 is preferably bonded to the surface 2a of the electric conductor layer 2, which faces the surface 1b, with an adhesive interposed therebetween. The diffused gas is therefore directly supplied to the surface 2a of the electric conductor layer 2, so that the oxygen reduction reaction develops efficiently. To secure the adhesion between the water-repellent layer 1 and electric conductor layer 2, the adhesive is preferably provided for at least a part between the water-repellent layer 1 and electric conductor layer 2. To improve the adhesion between the water-repellent layer 1 and electric conductor layer 2 and stably supply gas to the electric conductor layer 2 over a long period of time, it is more preferable that the adhesive is provided for the entire surface between the water-repellent layer 1 and electric conductor layer 2.

The adhesive is preferably permeable to oxygen. The adhesive can be a resin containing at least one selected from the group consisting of polymethyl methacrylate, methacrylate-styrene copolymer, styrene-butadiene rubber, butyl rubber, nitrile rubber, chloroprene rubber, and silicone.

### <Electric conductor layer>

The electric conductor layer 2 in the electrode structure 10 has a thin-plate shape and holds an oxygen reduction catalyst. The electric conductor layer 2 preferably includes a porous electroconductive material and an oxygen reduction catalyst held by the electroconductive material. The electric conductor layer 2 may be composed of an oxygen reduction catalyst which is porous and electroconductive. By providing the thus-configured electric conductor layer 2 for the electrode structure 10, electrons generated by later-described local cell reaction can be transported between the catalyst and an external circuit 80. As described later, the electric conductor layer 2 supports a catalyst inside, and the catalyst is an oxygen reduction catalyst. When electrons move from the external circuit 80 to the catalyst through the electric conductor layer 2, the catalyst can promote the oxygen reduction reaction of oxygen, hydrogen ions, and electrons.

To secure stable performances in the electrode structure 10, it is preferable that oxygen efficiently permeates the water-repellent layer 1 and electric conductor layer 2 to be supplied to the catalyst. The electric conductor layer 2 is preferably a porous body including a lot of pores that allows the passage of oxygen, from the surface 2a facing the water-repellent layer 1 to the opposite surface 2b. Moreover, it is particularly preferable that the electric conductor layer 2 has a three-dimensional mesh structure. When the electric conductor layer 2 has a mesh structure, the electric conductor layer 2 can be provided with high oxygen permeability and electric conductivity.

Examples of the electroconductive material of the electric conductor layer 2 include woven and non-woven fabrics of carbon fibers such as carbon paper and carbon cloth, mesh and foam made of metal such as stainless steel, rolled expanded graphite, and sintered particles of metallic oxides, such as indium-tin oxides (ITO) and zinc oxides.

The aforementioned rolled expanded graphite is obtained as follows. First, natural graphite is chemically treated with an acid to form insertions between graphene layers of the graphite. Next, the resultant is rapidly heated at high temperature to produce expanded graphite in which gaps between the graphene layers are expanded due to gas pressure resulting from thermal decomposition of the insertions. The produced expanded graphite is compressed and rolled to form the rolled expanded graphite.

The electroconductive material of the electric conductor layer 2 can be composed of at least one type of material selected from the group consisting of carbon substances, electroconductive polymers, semiconductors, and metals, for example. Herein, the carbon substances refer to substances composed of carbon. Examples of the carbon substances include carbon powder such as graphite, activated carbon, carbon black, VULKAN (registered trademark) XC-72R, acetylene black, furnace black, and DENKA BLACK, carbon fibers such as graphite felt, carbon wool, and carbon woven fabric, carbon plates, carbon paper, carbon disks, carbon cloth, carbon foil, and materials obtained by compressing carbon particles. Examples of the carbon substances also include microstructure substances such as carbon nanotubes, carbon nanohoms, and carbon nanoclusters. Furthermore, the electroconductive material of the electric conductor layer 2 can be a metallic material such as metal mesh or foam.

The electroconductive polymers are a generic term for electroconductive high-molecular weight compounds. Examples of the electroconductive polymers are polymers of one type of monomers or two or more types of monomers composed of aniline, aminophenol, diaminophenol, pyrrole, thiophene, paraphenylene, fluorene, furan, acetylene, or derivatives thereof as a building block. Specific examples of the electroconductive polymer are polyaniline, polyaminophenol, polydiaminophenol, polypyrrole, polythiophene, polyparaphenylene, polyfluorene, polyfuran, and polyacetylene. Examples of the metallic electroconductive materials include stainless steel mesh. In light of availability, cost, corrosion resistance, durability, and the like, the electroconductive material is preferably one of the carbon substances.

The electroconductive material may be in the form of powder or fibers. The electroconductive material may be supported by a support. The support refers to a member which has rigidity itself and is able to give the electric conductor layer 2 a certain shape. The support may be either an insulator or an electric conductor. Examples of the support that is an insulator are glass, plastic, synthesis rubber, ceramics, and water-resistant or water-repellent processed paper, plant-derived materials such as wood chips, and animal-derived materials such as bone fragments and shells. Examples of the support having a porous structure include porous ceramic, porous plastic, and sponge. Examples of the support that is an electric conductor include carbon substances such as carbon paper, carbon fibers, and carbon sticks, metals, and electroconductive polymers. When the support is an electric conductor, the electroconductive material supporting the carbon substance is provided on the surface of the support, so that the support can also function as a collector.

### <Oxygen reduction catalyst>

The oxygen reduction catalyst held by the electric conductor layer 2 is preferably a catalyst which develops a large volume of reaction per unit time at low overvoltage in the oxygen reduction reaction expressed by the following reaction formulae especially when used in a microbial fuel cell.

O₂ + 2H₂O + 4e⁻ → 4OH⁻

(in alkaline solution)

O₂ + 4H⁺ + 4e⁻ → 2H₂O

(in acid solution)

Examples of the oxygen reduction catalyst held by the electric conductor layer 2 include: platinum-group catalysts such as platinum, palladium, rhodium, ruthenium, and iridium supported on the activated carbon; carbon doped with nitrogen and transition metal, such as iron, cobalt, nickel, and copper; and oxynitrides of transition metal, such as tantalum, zirconium, and titanium.

The oxygen reduction catalyst in the electric conductor layer 2 is preferably a carbon material doped with metal atoms. The metal atoms are not particularly limited but are preferably atoms of at least one type of metal selected from the group consisting of titanium, vanadium, chrome, manganese, iron, cobalt, nickel, copper, zirconium, niobium, molybdenum, ruthenium, rhodium, palladium, silver, hafnium, tantalum, tungsten, rhenium, osmium, iridium, platinum, and gold. In this case, the carbon material exerts an excellent catalytic performance and promotes the oxygen reduction reaction in particular. The amount of metal atoms contained in the carbon material is properly set so that the carbon material provides an excellent catalytic performance.

The carbon material is preferably doped with at least one type of non-metal atoms selected from the group consisting of nitrogen, boron, sulfur, and phosphor. The amount of non-metal atoms doped in the carbon material is properly set so that the carbon material provides an excellent catalytic performance.

The carbon material is produced based on a carbon source material such as graphite and amorphous carbon, for example. The carbon source material is doped with metal atoms and at least one type of non-metal atoms selected from nitrogen, boron, sulfur, and phosphor to produce the oxygen reduction catalyst.

The combination of the metal atoms and non-metal atoms doped in the carbon material is properly selected. It is particularly preferable that the non-metal atoms include nitrogen while the metal atoms include iron. In this case, the carbon material has a particularly excellent catalytic activity. The non-metal atoms may include only nitrogen, or the metal atoms may include only iron atoms.

The non-metal atoms may include nitrogen while the metal atoms include at least one of cobalt and manganese. In this case, the carbon material also has a particularly excellent catalytic activity. The non-metal atoms may include only nitrogen. The metal atoms may include only manganese or cobalt, or may include only cobalt and manganese.

The form of the carbon material is not particularly limited. The carbon material is in the form of particles or a sheet, for example. The dimensions of the carbon material in the form of a sheet are not particularly limited, and the carbon material may have minute dimensions, for example. The carbon material in the form of a sheet may be porous. The porous carbon material in the form of a sheet preferably has a form of woven or non-woven fabric. Such carbon materials can constitute the electric conductor layer 2 without separately including an electroconductive material.

The carbon material constituting the oxygen reduction catalyst in the electric conductor layer 2 can be prepared as follows. First, a mixture is prepared, which includes the non-metal compound containing at least one type of nonmetal selected from the group consisting of nitrogen, boron, sulfur, and phosphor, for example, the metal compound, and the carbon source material. The mixture is heated at a temperature of not lower than 800 °C and not higher than 1000 °C for not shorter than 45 seconds and not longer than 600 seconds. The carbon material configured as a catalyst is thereby obtained.

The carbon source material can be graphite or amorphous carbon as described above, for example. The aforementioned metal compound is not particularly limited if the metal compound includes metal atoms capable of forming coordinate bonds with the non-metal atoms doped in the carbon source material. The metal compound can be at least one selected from the group consisting of inorganic metallic salts, such as chlorides, nitrates, sulfates, bromides, iodides, and fluorides of metal, for example, organic metallic salts such as acetates, hydrates of inorganic metallic salts, and hydrates of organic metallic salts. When graphite is doped with iron, for example, the metal compound preferably contains iron (III) chloride. When graphite is doped with cobalt, the metal compound preferably contains cobalt chloride. When the carbon source material is doped with manganese, the metal compound preferably contains manganese acetate. The amount of the metal compound mixed is preferably determined so that the ratio of metal atoms in the metal compound to the carbon source material is in the range from 5 to 30 % by mass and more preferably determined so that the ratio is in the range from 5 to 20 % by mass.

The non-metal compound is preferably a compound of at least one kind of nonmetal selected from the group consisting of nitrogen, boron, sulfur, and phosphor as described above. The non-metal compound can be at least one kind of compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. The amount of the non-metal compound is properly set in accordance with the amount of non-metallic atoms doped in the carbon source material. The amount of the non-metal compound is preferably determined so that the molar ratio of the metal atoms in the metal compound to the non-metal atoms in the non-metal compound is in the range of 1/1 to 1/2 and more preferably determined so that the ratio is in the range of 1/1.5 to 1/1.8.

The mixture containing the non-metal compound, metal compound, and carbon source material in the process of preparing the carbon material configured as a catalyst is obtained as follows, for example. First, the carbon source material is mixed with the metal compound and non-metal compound. The resultant has a solvent, such as ethanol, added when needed, thus preparing the desired total volume. The resultant liquid is dispersed by an ultrasonic dispersion process and is then heated at a proper temperature (60 °C, for example), followed by drying for removal of the solvent. The mixture containing the non-metal compound, metal compound, and carbon source material is thereby obtained.

Next, the obtained mixture is heated under a reducing atmosphere or an inert gas atmosphere, for example. The carbon source material is doped with the non-metal atoms, and the non-metal atoms and metal atoms form coordinate bonds. The carbon material is thereby doped with the metal atoms. The heating temperature is preferably not lower than 800 °C and not higher than 1000 °C, and the heating time is preferably not less than 45 seconds and less than 600 seconds. Since the heating time is short, the carbon material is manufactured efficiently, and the catalytic activity of the carbon material is further increased. In the heating process, the rate at which the temperature of the mixture increases is preferably not less than 50 °C/s at the start of heating. Such rapid heating further increases the catalytic activity of the carbon material.

The carbon material may be acid-washed. For example, the carbon material is dispersed in pure water for 30 minutes by a homogenizer and is then put into 2M sulfuric acid, followed by stirring at 80 °C for three hours. In this case, it is possible to reduce elution of the metallic components from the carbon material.

The carbon material obtained by the above-described manufacturing method contains significantly low proportions of inert metal compounds and metal crystals and has high electric conductivity.

In the electric conductor layer 2, the oxygen reduction catalyst may be bound to the electroconductive material using a binder. In other words, the oxygen reduction catalyst may be supported using a binder, on the surface and in the pores of the electroconductive material. This can prevent the oxygen reduction catalyst from being eliminated from the electroconductive material to degrade the oxygen reduction properties. The binder is preferably composed of at least one selected from the group consisting of polytetrafluoroethylene, polyvinylidene fluoride (PVDF), and ethylene-propylene-diene copolymer (EPDM), for example. Moreover, the binder is also preferably NAFION (registered trademark).

### <Filter layer>

The electrode structure 10 of the first embodiment further includes the filter layer 3 in addition to the water-repellent layer 1 and electric conductor layer 2. The filter layer 3 prevents microorganisms from adhering to the surface and inside of the electrode structure.

As described later, when the electrode structure 10 is used in a microbial fuel cell or water treatment apparatus, the water-repellent layer 1 of the electrode structure 10 is provided so as to be in contact with gas containing oxygen while the filter layer 3 is provided so as to be in contact with the liquid 12 to be treated. In the liquid 12 to be treated, microorganisms that decompose organic matters or compounds containing nitrogen (nitrogen-containing compounds) float. By providing the filter layer 3, microorganisms are prevented from entering the water-repellent layer 1 and electric conductor layer 2 from the liquid 12 to be treated, thus reducing microorganisms adhering to the water-repellent layer 1 and electric conductor layer 2.

Herein, in the electrode structure 10 of the first embodiment, to secure the stable performance, it is preferable that hydrogen ions generated at the anode are efficiently supplied to the oxygen reduction catalyst held in the electric conductor layer 2. The filter layer 3 is therefore permeable to hydrogen ions. In other words, the filter layer 3 includes a lot of through holes that allow passage of hydrogen ions from the surface 3b in contact with the liquid 12 to be treated to the opposite surface 3a.

The porosity of the filter layer 3 is preferably not less than 50% and more preferably not less than 70%. Generally, as the porosity of the filter layer 3 increases, the physical strength of the filter layer 3 decreases. The porosity of the filter layer 3 is preferably limited to such a degree that the physical strength of the electrode structure is not negatively impacted when using the electrode structure.

As described above, the filter layer 3 includes a lot of through holes that allow the passage of hydrogen ions. When the diameter of the through holes is larger than microorganisms, however, microorganisms pass through the filter layer 3 and reach the electric conductor layer 2. The diameter of the through holes of the filter layer 3 needs to be not greater than 0.5 µm. As for typical size of microorganisms, cocci have a diameter ranging from 0.5 to 1 µm. Bucilli have a width ranging from 0.5 to 1 µm and a length ranging from 2 to 4 µm. Accordingly, if the diameter of the through holes of the filter layer 3 is not greater than 0.5 µm, most microorganisms are prevented from entering the electrode structure and reaching the water-repellent layer 1 and electric conductor layer 2.

When the through holes of the filter layer 3 have a diameter of not greater than 0.5 µm, the passage of microorganisms can be reduced. However, to improve proton permeability, the diameter of the through holes preferably is as large as possible within the range of not greater than 0.5 µm. From the viewpoint of the process to manufacture the filter layer, the diameter of the through holes of the filter layer 3 is more preferably not less than 0.01 µm. The diameter of the through holes of the filter layer 3 can be obtained by gas flow measurement. The diameter of the through holes in the surface of the filter layer 3 can be measured using a scanning electron microscope (SEM) or a transmission electron microscope (TEM). The through hole diameter can be easily obtained by image analyzer processing for an image obtained by an SEM or TEM, for example.

In an embodiment not according to the invention, the filter layer 3 can be hydrophilic. If the filter layer 3 is hydrophilic, the liquid 12 to be treated easily penetrates the filter layer 3, and hydrogen ions easily move within the filter layer 3, implementing efficient oxygen reduction reaction. The catalyst activity is therefore reduced little, and the electrode structure provides high durability. This can implement stable production of electric energy while preventing reduction in power generation performance.

In such an embodiment not according to the invention, the filter layer 3 can be electrically insulating and is permeable to hydrogen ions. When the electrode structure of the first embodiment is used as the cathode of a microbial fuel cell, the electrically insulating filter layer 3 can prevent short circuits between the positive and anodes as described later.

The filter layer 3 can generally be composed of a film including a lot of through holes which are smaller than microorganisms and allow the passage of hydrogen ions. Specifically, the filter layer 3 can generally be composed of continuous film or non-woven fabric including fine pores. The material constituting such film is not particularly limited but can generally be composed of at least one selected from the group consisting of polytetrafluoroethylene (PTFE), polyvinylidene fluoride (PVDF), and polyimide (PI), for example.

In a general embodiment, the filter layer 3 is composed of polytetrafluoroethylene or polyimide. In a further general embodiment not within the scope of the present invention, the filter layer 3 is composed of polytetrafluoroethylene or polyvinylidene fluoride including a hydrophilic functional group. These materials can generally be used as the filter layer 3 because these materials are electrically insulating while easily forming a lot of through holes that allow the passage of hydrogen ions but limit the passage of microorganisms.

In the electrode structure 10 illustrated in FIG. 1, the filter layer 3 may be bonded to the electric conductor layer 2 through an adhesive in order to prevent microorganisms from entering the water-repellent layer 1 and electric conductor layer 2. In other words, the surface 3a of the filter layer 3 may be bonded to the surface 2b of the electric conductor layer 2 facing thereto with an adhesive interposed therebetween. The adhesive is preferably provided at least a part of gap between the electric conductor layer 2 and filter layer 3 to secure the adhesion between the electric conductor layer 2 and filter layer 3. The adhesive may be provided for the entire surface between the electric conductor layer 2 and filter layer 3 to increase the adhesion between the electric conductor layer 2 and filter layer 3. The adhesive may be the aforementioned adhesive which can be provided between the water-repellent layer 1 and electric conductor layer 2.

According to the present invention, the filter layer 3 is an aggregation of plural particles. Such an aggregation is suitably used as the filter layer 3 because a lot of through holes are formed between particles and tend to have a diameter of not greater than 0.5 µm.

The particles constituting the aggregation can generally include at least one kind of particles selected from metals, inorganic compounds, and organic compounds. The particles can generally be particles containing resin. When the electrode structure 10 is used in a microbial fuel cell or water treatment apparatus, it is preferable that the filter layer 3 is electrically conductive. Accordingly, the particles constituting the aggregation are preferably electroconductive particles and according to the present invention particles of carbon materials. Since particles of carbon materials are electroconductive, the filter layer 3 itself can increase in electric conductivity when composed of an aggregation of a carbon material. Carbon materials are less likely to be corroded and degraded even if coming into contact with the liquid to be treated, so that high power generation performance can be maintained over a long period of time.

Such a carbon material is preferably at least one selected from the group consisting of carbon black, carbon nanotubes, and graphite, for example. From the viewpoint of formation of a lot of fine through holes in the filter layer 3, the particles constituting the aggregation particularly preferably include carbon black. Carbon black can be composed of at least one selected from the group consisting of furnace black, channel black, acetylene black, and thermal black.

The particles constituting the aggregation may have any diameter as long as the diameter of through holes formed between the particles in the process of forming the aggregation is not greater than 0.5 µm. Preferably, the diameter of the particles constituting the aggregation ranges from 10 nm to 0.1 µm. The diameter of the particles can be obtained by dynamic light scattering.

When the filter layer 3 is composed of an aggregation of particles, a binder to bind the particles to form a porous body is preferably used. The binder may be composed of any material that is able to bind the particles. The binder is preferably at least one selected from the group consisting of polytetrafluoroethylene (PTFE), polyvinylidene fluoride (PVDF), and ethylene-propylene-diene copolymer (EPDM), for example.

The filter layer 3 composed of an aggregation of plural particles can be produced as follows. First, the aforementioned particles and binder are mixed into a solvent for preparing a slurry for aggregation. The amounts of the particles and binder mixed are preferably properly adjusted so as to form fine through holes. The solvent used to prepare the slurry is not particularly limited and is water or an alcohol solvent such as methanol, ethanol, 1-propanol, 2-propanol, ethylene glycol, or propylene glycol. The prepared slurry may have publicly-known surfactants and thickeners added when needed.

Next, the slurry for aggregation is applied to a holder and dried, forming a precursor to the aggregation. The holder used in this process is preferably the electric conductor layer 2 itself which has heat resistance and is resistant to drying and baking. The filter layer 3 may be formed by peeling off and transferring the obtained aggregation, and the holder may be composed of a base material excellent in detachability. The base material can be selected from various metal plates, metal mesh, glass plates, various ceramics plates, various types of heat-resistant resin plates, and the like. The temperature for drying the slurry for aggregation is not particularly limited if the solvent in the slurry can be removed and is preferably set to 80 to 120 °C, for example.

The formed precursor to the aggregation is subjected to pressure to be compressed. The pressure in this process is not particularly limited but is preferably 1 to 20 kgf/cm², for example. Subsequently, the product is dried or baked, producing the aggregation as the filter layer 3. The baking temperature is not particularly limited but is preferably set to 100 to 350 °C, for example. The aforementioned drying and baking may be performed in an inert atmosphere or in air.

As described above, the aggregation can be formed by directly applying the slurry for aggregation on the surface 2b of the electric conductor layer 2 and compressing the same, followed by drying or baking. In this case, since the slurry for aggregation is directly applied to the electric conductor layer 2, the area of contact between the filter layer 3 and electric conductor layer 2 can be increased.

As described above, the electrode structure 10 according to the first embodiment includes the water-repellent layer 1, which is permeable to oxygen, and the electric conductor layer 2, which is laid on the water-repellent layer 1 and holds the oxygen reduction catalyst. The electrode structure 10 further includes the filter layer 3, which is laid on the surface 2b of the electric conductor layer 2 on the opposite side to the surface 2a on which the water-repellent layer 1 is laid, and includes plural through holes having a diameter of 0.01 µm to 0.5 µm. With such a configuration, in the presence of microorganisms, the filter layer 3 can prevent microorganisms from adhering to the surfaces and insides of the water-repellent layer 1 and electric conductor layer 2.

Herein, when microorganisms adhere to the surface of the electric conductor layer 2, microorganisms consume oxygen near catalytic sites by breathing, reducing the concentration of reactants necessary for the oxygen reduction reaction. The volume of oxygen reduction reaction is therefore reduced. The volume of oxygen reduction reaction is also reduced when catalytic sites are poisoned by microorganisms and secretions thereof. This results in reduction in power generation performance of the microbial fuel cell. However, by using the electrode structure 10 according to the first embodiment in a microbial fuel cell, the above-described problems can be avoided, and the microbial fuel cell provides high durability.

As described above, the electric conductor layer 2 can be configured to include the porous electroconductive material and the oxygen reduction catalyst held by the electroconductive material. In this case, the oxygen reduction catalyst is preferably held throughout the electric conductor layer 2. Alternatively, the electric conductor layer 2 may be composed of a porous and electroconductive oxygen reduction catalyst by pressing the oxygen reduction catalyst or another method. In other words, the electric conductor layer 2 may be composed of an electroconductive oxygen reduction catalyst. The electric conductor layer 2 may be configured to hold a catalyst layer including the oxygen reduction catalyst in at least one surface.

Specifically, like an electrode structure 10A illustrated in FIG. 2, a catalyst layer 4 including the oxygen reduction catalyst is laid on the surface 2b of the electric conductor layer 2 on the opposite side to the surface 2a on which the water-repellent layer 1 is laid. In this case, the catalyst layer 4 is laid so that a surface 4a of the catalyst layer 4 is in contact with the surface 2b of the electric conductor layer 2 and the surface 3a of the filter layer 3 is in contact with a surface 4b of the catalyst layer 4 on the opposite side to the surface 4a. With this configuration, oxygen is supplied to the surface 4a of the catalyst layer 4 through the water-repellent layer 1 and electric conductor layer 2, and hydrogen ions are supplied to the surface 4b of the catalyst layer 4 through the filter layer 3, implementing efficient oxygen reduction reaction.

The catalyst layer 4 is preferably composed of a porous body allowing the passage of hydrogen ions and oxygen so that hydrogen ions and oxygen are likely to come into contact with the surface of the oxygen reduction catalyst. The catalyst layer 4 may be formed by pressing the oxygen reduction catalyst.

The catalyst layer 4 may further include a binder to bind particles of the oxygen reduction catalyst to form the porous body. The binder included in the catalyst layer 4 is not particularly limited if the binder does not fully cover the reaction sites of the catalyst and has a property of binding particles of the catalyst.

The binder included in the catalyst layer 4 can be composed of ion-conducting resin, for example. The ion-conducting resin is not particularly limited and can be determined by properly referring to the conventional knowledge. Ion-conducting resins are broadly classified according to the type of ion exchange resin included in the same into fluorine polyelectrolytes and hydrocarbon polyelectrolytes. Examples of the ion exchange resins constituting fluorine polyelectrolytes are perfluorocarbon sulfonic acid polymers, such as NAFION (registered trademark, DuPont), Aciplex (registered trademark, Asahi Kasei Corporation), FLEMION (registered trademark, Asahi Glass Co., Ltd.), perfluorocarbon phosphonic acid polymers, trifluorostyrene sulfonic acid polymers, ethylene tetrafluoroethylene-g-styrene sulfonic acid polymers, ethylene-tetrafluoroethylene copolymer, and polyvinylidene fluoride-perfluorocarbon sulfonic acid polymers. In addition to the ion-conducting resins, examples of the binder included in the catalyst layer 4 are vinyl acetate, nitrile rubber, cyanoacrylate, silicone rubber, epoxy resin, acrylic resin, styrene-butadiene rubber, polyvinylidene fluoride, and chloroprene rubber.

In the case of reaction involving gas, such as oxygen reduction reaction, it is preferable that the three phase zone in which the reaction gas (oxygen), electrolysis solution (liquid to be treated), and catalyst are in contact is widely formed in the catalyst layer 4. To efficiently form the three phase zone, a hydrophobic substance may be added to the catalyst layer 4. The hydrophobic substance is preferably an electroconductive hydrophobic substance and can be carbon covered with resin including fluorine groups, carbon covered with polydimethylsiloxane, sintered mixture of carbon and PTFE, and the like, for example.

In the configuration where the catalyst layer 4 is held on at least the surface 2b of the electric conductor layer 2 as illustrated in FIG. 2, the electric conductor layer 2 may or may not support the oxygen reduction catalyst inside. When the electric conductor layer 2 does not support the oxygen reduction catalyst inside, the electric conductor layer 2 may be composed of a porous electroconductive material or may have a configuration in which the electroconductive material is supported on a support.

In the electrode structure 10A illustrated in FIG. 2, the filter layer 3 is laid on the surface 4b of the catalyst layer 4. This prevents microorganisms from entering the catalyst layer 4 and thereby implements stable production of electric energy. Moreover, this configuration can reduce deterioration due to microorganisms adhering to the inside of the catalyst layer 4, preventing reduction in power generation performance.

### (Second embodiment)

Next, a description is given of an electrode structure according to a second embodiment in detail based on the drawings. The same components as those of the first embodiment are given the same reference numerals, and the redundant description is omitted.

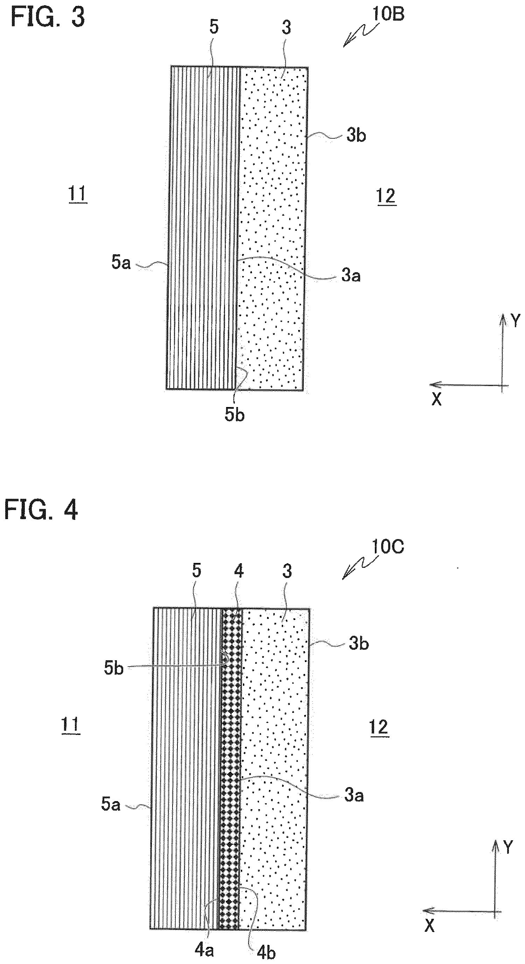

As illustrated in FIG. 3, the electrode structure 10B according to the second embodiment includes a filter layer 3 having plural through holes with a diameter of 0.01 µm to 0.5 µm and being an aggregation of a plurality of particles of a carbon material in a similar manner to the first embodiment. The electrode structure 10B further includes a water-repellent electric conductor layer 5 which is water-repellent and holds an oxygen reduction catalyst. Specifically, in the electrode structure 10B, the water-repellent electric conductor layer 5 is laid so that a surface 3a of the filter layer 3 is in contact with a surface 5b of the water-repellent electric conductor layer 5. When the electrode structure 10B is used in a microbial fuel cell or water treatment apparatus, at least a part of the surface 5a of the water-repellent electric conductor layer 5 is exposed to a gas phase 11, and the surface 3b of the filter layer 3 is in contact with the liquid 12 to be treated.

In the electrode structures 10 and 10A of the first embodiment, the oxygen-permeable water-repellent layer 1 and the electric conductor layer 2 holding the oxygen reduction catalyst are separated from each other and constitute different layers. However, in the second embodiment, water-repellency is given to the electric conductor layer, eliminating the need for the water-repellent layer 1. This can simplify the layer structure of the electrode structure 10B.

The surface 5a of the water-repellent electric conductor layer 5 is in contact with the gas phase 11 containing oxygen. Within the water-repellent electric conductor layer 5, gas in the gas phase 11 diffuses to be supplied to the catalyst held in the water-repellent electric conductor layer 5. Accordingly, the water-repellent electric conductor layer 5 is composed of a porous body including voids so as to diffuse the gas. The water-repellent electric conductor layer 5 serves as an electrically conducting path that supplies electrons necessary for oxygen reduction reaction. It is therefore preferable that at least a part of the water-repellent electric conductor layer 5 is electroconductive. It is more preferable that the water-repellent electric conductor layer 5 has higher electric conductivity.

The water-repellent electric conductor layer 5 includes a role of separating the gas phase 11 from the liquid 12 to be treated and therefore has water-repellency. All or only a part of the water-repellent electric conductor layer 5 may be water-repellent. The water-repellent electric conductor layer 5 does not need to be composed of a single material and may have a complex or laminate structure of a porous electroconductive material and a porous water-repellent material.

The water-repellent electric conductor layer 5 has a thin-plate shape similarly to the electric conductor layer 2 of the first embodiment and holds an oxygen reduction catalyst. The water-repellent electric conductor layer 5 preferably includes a porous electroconductive material and an oxygen reduction catalyst held in the electroconductive material. The water-repellent electric conductor layer 5 is preferably composed of a porous body having a lot of through holes extending from the surface 5a to the opposite surface 5b. The water-repellent electric conductor layer 5 preferably has a three-dimensional mesh structure. Such a mesh structure allows the water-repellent electric conductor layer 5 to provide high oxygen permeability and electric conductivity.

The water-repellent electric conductor layer 5 may be a porous body composed of a porous electroconductive material or may be a porous body including an electroconductive material supported on a support in a similar manner to the electric conductor layer 2 of the first embodiment.

The material giving water-repellency to the water-repellent electric conductor layer 5 is not particularly limited. Examples thereof are sintered particles or fibers of polytetrafluoroethylene (PTFE), polyvinylidene fluoride (PVDF), polypropylene (PP), and polyethylene (PE), polydimethylsiloxane (PDMS), and polymers of fluorine-contained resin. These materials are mixed to the aforementioned electroconductive material to give water-repellency to the water-repellent electric conductor layer 5.

The oxygen reduction catalyst supported within the water-repellent electric conductor layer 5 can be the same as that described in the first embodiment.

The water-repellent electric conductor layer 5 according to the second embodiment may be configured to hold a catalyst layer including an oxygen reduction catalyst in at least one surface in a similar manner to the electric conductor layer 2 of the first embodiment. Specifically, like an electrode structure 10C illustrated in FIG. 4, a catalyst layer 4 including an oxygen reduction catalyst may be laid on the surface 5b of the water-repellent electric conductor layer 5 on the opposite side to the surface 5a exposed to the gas phase 11. In this case, the catalyst layer 4 is laid so that a surface 4a of the catalyst layer 4 is in contact with the surface 5b of the water-repellent electric conductor layer 5 and the surface 3a of the filter layer 3 is in contact with a surface 4b of the catalyst layer 4 on the opposite side to the surface 4a. In such a configuration, oxygen is supplied to the surface 4a of the catalyst layer 4 through the water-repellent electric conductor layer 5 while hydrogen ions are supplied to the surface 4b of the catalyst layer 4 through the filter layer 3, allowing the oxygen reduction reaction to be progressed efficiently. In this case, the water-repellent electric conductor layer 5 may or may not support the oxygen reduction catalyst inside.

The electrode structures 10B and 10C according to the second embodiment each include the water-repellent electric conductor layer 5, which is water-repellent and holds an oxygen reduction catalyst, and the filter layer 3, which is laid on the water-repellent electric conductor layer 5 and includes plural through holes with a diameter of 0.01 µm to 0.5 µm. In the electrode structures 10B and 10C, in the presence of microorganisms, the filter layer 3 reduces adherence of microorganisms to the surface of the water-repellent electric conductor layer 5. This prevents microorganisms from entering the water-repellent electric conductor layer 5, thereby implementing stable production of electric energy. Moreover, this configuration can reduce deterioration due to microorganisms attached to the inside of the water-repellent electric conductor layer 5, thus preventing reduction in power generation performance. Moreover, since the water-repellent layer 1 is unnecessary, the configuration of the electrode structure can be simplified.

### (Third embodiment)

Next, a description is given of an electrode structure according to a third embodiment in detail based on the drawings. The same components of the first and second embodiments are given the same reference numerals, and a redundant description is omitted.

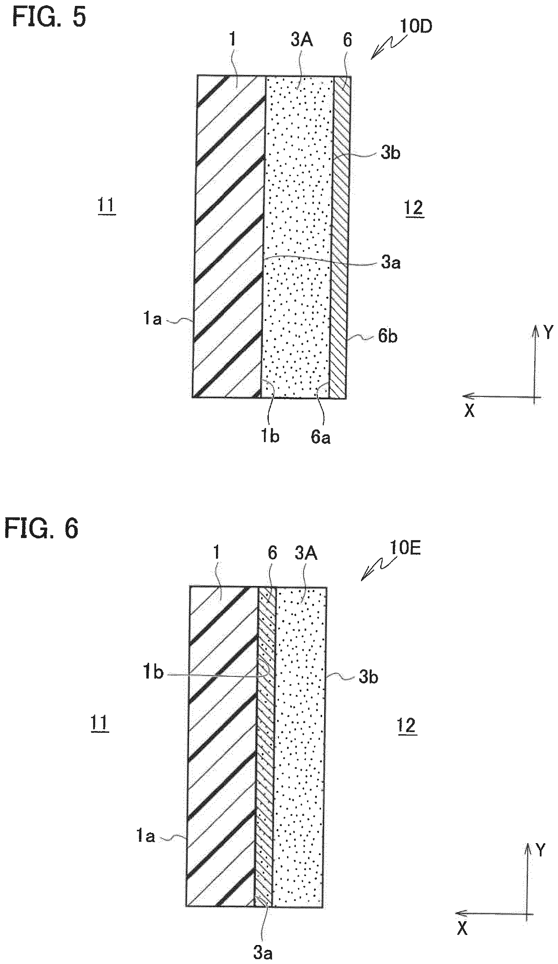

As illustrated in FIG. 5, an electrode structure 10D according to the third embodiment includes a filter layer 3A including plural through holes with a diameter of 0.01 µm to 0.5 µm and being an aggregation of a plurality of particles of a carbon material in a similar manner to the first embodiment. The electrode structure 10D further includes a water-repellent layer 1 similarly to the first embodiment. To secure the electric conduction, the filter layer 3A is provided with an auxiliary electric conductor 6. Such a configuration eliminates the need for the electric conductor layer 2 and water-repellent electric conductor layer 5.

As illustrated in FIG. 5, in the electrode structure 10D, the water-repellent layer 1 is provided on a surface 3a of the filter layer 3A. Specifically, the water-repellent layer 1 is laid so that the surface 3a of the filter layer 3A is in contact with a surface 1b of the water-repellent layer 1. The water-repellent layer 1 separates the liquid 12 to be treated as the liquid phase from the gas phase 11 in a similar manner to the first embodiment. The water-repellent layer 1 is in contact with the gas phase 11 including oxygen to diffuse gas contained in the gas phase 11 and further supplies the gas to the surface 3a of the filter layer 3A substantially uniformly. The water-repellent layer 1 can be the same as that described in the first embodiment.

When the electrode structure 10D is used in a microbial fuel cell or water treatment apparatus, the water-repellent layer 1 is provided so as to be in contact with gas containing oxygen while the filter layer 3A is provided so as to be in contact with the liquid 12 to be treated. By providing the filter layer 3A, microorganisms are prevented from moving from the liquid 12 to be treated to the inside of the filter layer 3A and the water-repellent layer 1, reducing the adherence of microorganisms to the inside of the filter layer 3A and the water-repellent layer 1.

The thus-configured filter layer 3A can be the same as that of the filter layer 3 described in the first embodiment. The filter layer 3A is an aggregation of plural particles. The filter layer 3A includes a lot of through holes formed between the particles. The particles constituting the aggregation can generally be particles containing at least one kind of metals, inorganic compounds, and organic compounds. According to the present invention, the particles constituting the aggregation are particles of a carbon material. Moreover, the particles constituting the aggregation can be particles containing resin. Since the filter layer 3A is preferably electroconductive, the particles constituting the aggregation are electroconductive particles of a carbon substance.

To promote later-described local cell reaction, the filter layer 3A includes catalyst particles. Including the catalyst particles promotes reaction between oxygen transferred by the water-repellent layer 1 and hydrogen ions transferred to the filter layer 3A, increasing the oxygen reduction efficiency. This can implement more efficient cell reaction. The catalyst particles can the same as those of the oxygen reduction catalyst described in the first embodiment. Even when the filter layer 3A includes such catalyst particles, the filter layer 3A prevents microorganisms from entering the inside thereof. It is therefore possible to implement stable production of electric energy and prevent reduction in power generation performance.

### <Auxiliary electric conductor>

In the third embodiment, the filter layer 3A is provided with the auxiliary electric conductor 6 as illustrated in FIG. 5. By providing the auxiliary electric conductor 6, electrons generated by the local cell reaction can be transported between the filter layer 3A and external circuit 80.

As described above, when the filter layer 3A is composed of an aggregation of particles of a carbon substance, the filter layer 3a is more likely to be given electric conductivity. When the auxiliary electric conductor 6 is provided for the aggregation of the carbon substance, the cell reaction efficiency can be further increased. It is therefore preferable that the auxiliary electric conductor 6 is used in the third embodiment.

As illustrated in FIG. 5, the auxiliary electric conductor 6 is preferably arranged so as to provide electric conduction along a direction Y perpendicular to the stacking direction X of the water-repellent layer 1 and filter layer 3A. When the auxiliary electric conductor 6 is arranged in such a manner, the auxiliary electric conductor 6 has higher electric conduction in the direction Y perpendicular to the stacking direction X of water-repellent layer 1 and filter layer 3A than in the stacking direction X. Electrons generated by local cell reaction are therefore readily transported between the filter layer 3A and the external circuit 80, further increasing the cell reaction efficiency.

As illustrated in FIG. 5, the auxiliary electric conductor 6 is provided so as to be in contact with the surface 3b of the filter layer 3A on the opposite to the surface 3a, which is on the water-repellent layer 1 side, and may be partially exposed so as to be in contact with the liquid 12 to be treated. As illustrated in an electrode structure 10E illustrated in FIG. 6, it is preferable that at least a part of the auxiliary electric conductor 6 is provided within the filter layer 3A. By providing the auxiliary electric conductor 6 within the filter layer 3A, it is possible to implement more efficient electric conduction between the filter layer 3A and external circuit 80. As illustrated in FIG. 6, the auxiliary electric conductor 6 may be provided so as to be in contact with the surface 3b of the filer layer 3A and may be provided in the center of the filter layer 3A in the stacking direction X.

In the electrode structures 10D and 10E of the third embodiment, it is preferable that oxygen having permeated the water-repellent layer 1 is efficiently supplied to catalyst particles in order to secure stable performance. Moreover, it is also preferable that hydrogen ions transferred from the anode 20 are supplied to the catalyst particles efficiently. The auxiliary electric conductor 6 is preferably composed of a porous body including a lot of pores that allows the passage of oxygen and hydrogen ion. Moreover, the auxiliary electric conductor 6 preferably has a three-dimensional mesh structure. Such a mesh structure secures high oxygen and hydrogen ion permeability of the auxiliary electric conductor 6 while giving electric conductivity to the filter layer 3A.

The material constituting the auxiliary electric conductor 6 may be any material that can secure high electric conduction. However, the auxiliary electric conductor 6 is preferably composed of stainless steel or graphite. Stainless steel and graphite have high corrosion resistance and high electric conductivity and are suitably used as the material constituting the auxiliary electric conductor 6.

The auxiliary electric conductor 6 may be composed of a carbon material sheet. The carbon material sheet can be at least one selected from the group consisting of carbon paper, carbon cloth, and rolled expanded graphite. The auxiliary electric conductor 6 may be composed of at least one kind selected from the group consisting of carbon paper, carbon cloth, and expanded graphite rolled materials or may be composed of a laminate that is formed by laminating those materials. Carbon paper, which is non-woven fabric of carbon fibers, carbon cloth, which is woven fabric of carbon fibers, and rolled expanded graphite have high corrosion resistance and have electric resistivity equal to those of metal materials, thus implementing both the durability and electric conductivity.

The rolled expanded graphite can be the same as those described in the first embodiment. When the thus obtained rolled material is used as the auxiliary electric conductor 6, graphene layers of graphite are arrayed along the direction Y perpendicular to the stacking direction X, increasing the electric conduction between the filter layer 3 and external circuit 80 and further increasing the cell reaction efficiency.

As described above, the electrode structures 10B and 10C of the third embodiment include: the water-repellent layer 1 which is permeable to oxygen; the filter layer 3A, which is laid on the water-repellent layer 1 and includes plural through holes with a diameter of 0.01 µm to 0.5 µm; and the auxiliary electric conductor 6 provided for the filter layer 3A. By providing the filter layer 3A, microorganisms are less likely to adhere to the surface and inside of the water-repellent layer 1. This prevents microorganisms from consuming oxygen contained in air in the surface and inside of the water-repellent layer 1 and reducing the power generation performance of the microbial fuel cell. By providing the auxiliary electric conductor 6 for the filter layer 3A, the electric conduction of the entire filter layer 3A is increased, and electrons generated by local cell reaction are transported efficiently between the filter layer 3A and external circuit 80.

### (Fourth embodiment)

Next, a description is given of an electrode structure according to a fourth embodiment in detail based on the drawings. The same components as those of the first to third embodiments are given the same reference numerals, and the overlapping description is omitted.

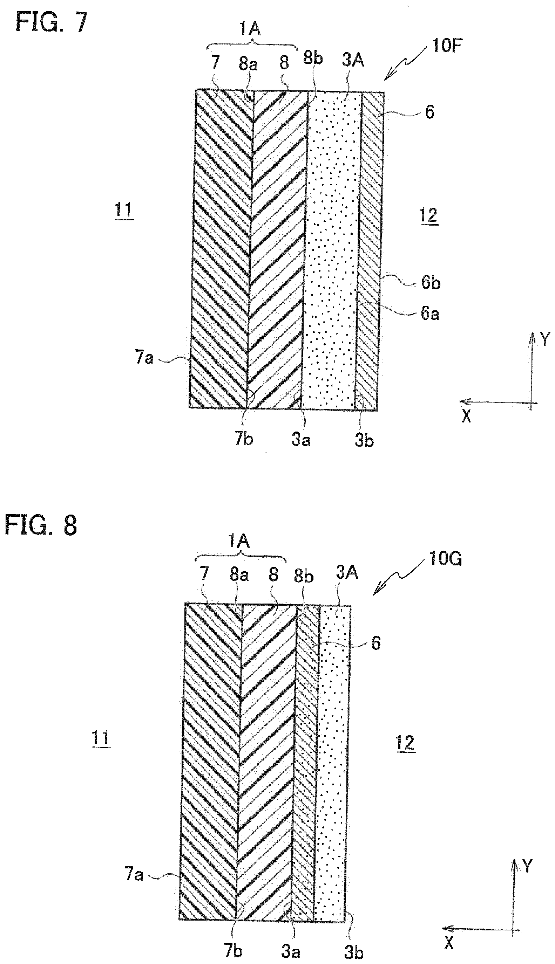

As illustrated in FIG. 7, an electrode structure 10F according to the fourth embodiment includes: a filter layer 3A being an aggregation of a plurality of particles of a carbon material and including plural through holes with a diameter of 0.01 µm to 0.5 µm; and an auxiliary electric conductor 6 provided for the filter layer 3A in a similar manner to the third embodiment. While the electrode structure 10F further includes a water-repellent layer 1A, which is oxygen-permeable and water-repellent, similarly to the third embodiment, the water-repellent layer 1A is composed of two layers including a diffusion layer 7 and an oxygen permeable layer 8 in the fourth embodiment.

### <Diffusion layer>

In the diffusion layer 7, at least a part of a surface 7a is exposed to gas phase 11. The diffusion layer 7 diffuses gas in the gas phase 11 and supplies the gas to a surface 8a of an oxygen permeable layer 8 substantially uniformly. The diffusion layer 7 is preferably composed of a porous body so as to diffuse the gas. Moreover, the diffusion layer 7 is preferably water-repellent. When the diffusion layer 7 is water-repellent, it is possible to prevent pores of the porous body from being clogged due to dew condensation and the like to reduce diffusion of gas. Moreover, as described later, when the electrode structure 10F is used in a microbial fuel cell or water treatment apparatus, the liquid 12 to be treated is less likely to penetrate the diffusion layer 7, and the diffusion layer 7 is more likely to be in contact with the gas phase.

The material constituting the diffusion layer 7 is not particularly limited if the diffusion layer 7 is able to diffuse the gas in the gas phase 11. The material constituting the diffusion layer 7 can be at least one selected from the group consisting of polyethylene, polypropylene, nylon, and polytetrafluoroethylene, for example. These materials are easily formed into a porous body and are highly water-repellent. Accordingly, these materials prevent pores from being clogged, increasing gas diffusion. The diffusion layer 7 is preferably non-woven fabric or film composed of the aforementioned materials. When the diffusion layer 7 is composed of film of one of the aforementioned materials, the diffusion layer 7 preferably includes plural through holes extending in a stacking direction X of the diffusion layer 7, oxygen permeable layer 8, and filter layer 3A.

To improve the water-repellency of the diffusion layer 7, the diffusion layer 7 may be subjected to water-repellent treatment using a water-repellent when needed. Specifically, a water-repellent, such as polytetrafluoroethylene (PTFE), is applied to the porous body constituting the diffusion layer 7 for improving the water-repellency thereof.

To supply gas to the surface 8a of the oxygen permeable layer 8 efficiently, the diffusion layer 7 is preferably in contact with the oxygen permeable layer 8 as illustrated in FIG. 7. Specifically, it is preferable that the surface 7b of the diffusion layer 7 is in contact with the surface 8a of the oxygen permeable layer 8, which faces the surface 7b. The diffused gas is thereby directly supplied to the surface 8a of the oxygen permeable layer 8, improving the oxygen permeability. As long as gas is supplied to the surface 8a of the oxygen permeable layer 8, there may be a gap between the surface 7b of the diffusion layer 7 and the surface 8a of the oxygen permeable layer 8.

### <Oxygen permeable layer>

As illustrated in FIG. 7, the electrode structure 10F includes the oxygen permeable layer 8 which is provided between the diffusion layer 7 and filter layer 3A and is permeable to oxygen. The oxygen permeable layer 8 is permeable to oxygen and therefore has a function of supplying oxygen to the surface 3a of the filter layer 3A.

The oxygen permeable layer 8 may be composed of any material that is permeable to oxygen and is preferably water-repellent. The material of the oxygen permeable layer 8 can be at least one of silicone rubber and polydimethylsiloxane, for example. These materials have high oxygen solubility and high oxygen diffusivity derived from a molecular structure of silicone, and are therefore excellent in oxygen permeability. Moreover, these materials include small surface free energy and therefore provide excellent water-repellent performance. Accordingly, it is particularly preferable that the oxygen permeable layer 8 includes silicone.

The material of the oxygen permeable layer 8 can be at least one selected from the group consisting of ethyl cellulose, poly-4-methylpentene-1, polybutadiene, polytetrafluoroethylene, and butyl rubber. These materials are preferable because these materials are highly oxygen-permeable and water-repellent.

The oxygen permeable layer 8 can be non-woven fabric such as waterproof breathable membrane or non-woven fabric of polyethylene and polypropylene. Specifically, the oxygen permeable layer 8 can be Gore-Tex (registered trademark) which is a complex of film of stretched polytetrafluoroethylene and polyurethane polymer.

To supply oxygen to the surface 3a of the filter layer 3 efficiently, as illustrated in FIG. 7, the oxygen permeable layer 8 is preferably in contact with the filter layer 3A. Specifically, the surface 8b of the oxygen permeable layer 8 is preferably in contact with the surface 3a of the filter layer 3A facing thereto. Oxygen is thereby directly supplied to the surface 3a of the filter layer 3A and then reaches the catalyst particles located within the filter layer 3A, so that the local cell reaction develops readily. As long as oxygen is supplied to the surface 3a of the filter layer 3A, there may be a gap between the surface 3a of the filter layer 3 and the surface 8b of the oxygen permeable layer 8.

The oxygen permeable layer 8 is preferably water-repellent. Specifically, the oxygen permeable layer 8 is more preferably a water-repellent sheet. As described later, when the electrode structure 10F is used in a microbial fuel cell or water treatment apparatus, the oxygen permeable layer 8 is provided so as to separate the gas phase 11 containing oxygen from the liquid 12 to be treated held within a wastewater tank 70. This can reduce movement of organic matters and nitrogen-containing compounds in the liquid 12 to be treated toward the gas phase 11.

Moreover, the amount of oxygen permeating the oxygen permeable layer 8 is controlled by selecting the material forming the oxygen permeable layer 8, so as to prevent oxygen molecules on the gas phase 11 side from excessively permeating into the liquid 12 to be treated. Accordingly, as described later, the wastewater tank more reliably maintains anaerobic conditions in which there is no oxygen. This can reduce growth of aerobic microorganisms in the wastewater tank, and the solution treatment can be performed under anaerobic conditions.

As described above, the electrode structure 10F of the fourth embodiment includes the water-repellent layer 1A composed of the oxygen permeable layer 8, which is permeable to oxygen, and the diffusion layer 7, which is laid on the surface 8a of the oxygen permeable layer 8 and is water-repellent. The electrode structure 10F further includes: the filter layer 3A, which is laid on the other surface 8b of the oxygen permeable layer 8 in the water-repellent layer 1A and includes plural through holes with a diameter of 0.01 µm to 0.5 µm; and the auxiliary electric conductor 6 provided for the filter layer 3A. By providing the filter layer 3A, microorganisms are less likely to adhere to the surfaces and insides of the diffusion layer 7 and oxygen permeable layer 8. It is therefore possible to prevent microorganisms from consuming oxygen in air on the surface and inside of the water-repellent layer 1, preventing reduction in power generation performance of the microbial fuel cell. Moreover, the filter layer 3A prevents microorganisms from adhering to the diffusion layer 7 and oxygen permeable layer 8, reducing deterioration of the diffusion layer 7 and oxygen permeable layer 8.

As illustrated in FIG. 7, the auxiliary electric conductor 6 is provided so as to be in contact with the surface 3b of the filter layer 3A on the opposite side to the surface 3a, which is on the water-repellent layer 1A side, and may be partially exposed so as to be in contact with the liquid 12 to be treated. However, like an electrode structure 10G illustrated in FIG. 8, it is preferable that at least a part of the auxiliary electric conductor 6 is provided with the filter layer 3A. Providing the auxiliary electric conductor 6 within the filter layer 3A allows for more efficient electric conduction between the filter layer 3A and external circuit 80. As illustrated in FIG. 8, the auxiliary electric conductor 6 may be provided so as to be in contact with the surface 3b of the filter layer 3A or may be provided in the center of the filter layer 3A in the stacking direction X.

### (Fifth embodiment)

Next, a description is given of an electrode structure according to a fifth embodiment not according to the invention.

The electrode structures of the first to fourth embodiments each include the filter layer 3 or 3A including through holes with a diameter of 0.01 µm to 0.5 µm and being an aggregation of a plurality of particles of a carbon material to reduce microorganisms adhering to the water-repellent layer 1, electric conductor layer 2, catalyst layer 4, water-repellent electric conductor layer 5, diffusion layer 7, and oxygen permeable layer 8. Herein, the through holes included in the filter layers 3 and 3A have a diameter of 0.01 µm to 0.5 µm. Since the through holes have such small diameters, it is preferable that oxygen reduction reaction (O₂ + 4H⁺ + 4e⁺ → 2H₂O) efficiently develops on the electrode structure by further increasing the conduction of hydrogen ions necessary for the oxygen reduction reaction.

To produce stable electric energy with a high current density, a filter layer according to the fifth embodiment includes at least one of a sulfo group and a hydroxyl group. This allows hydrogen ions to move through the sulfo group or hydroxyl group, considerably improving conduction of hydrogen ions. The oxygen reduction reaction can develop efficiently.

The filter layer according to the fifth embodiment includes the same configuration as the filter layers 3 and 3A according to the first to fourth embodiments. The filter layer include plural through holes with a diameter of 0.01 µm to 0.5 µm. The porosity of the filter layer 3 is preferably not less than 50% and more preferably not less than 70%. The filter layer 3 is a layer composed of an aggregation of plural particles.

Hydrogen ion conducting groups such as sulfo and hydroxyl groups are preferably provided for the inner surfaces of the through holes of the filter layer. When the hydrogen ion conducting groups are located in the inner surfaces of the through holes, hydrogen ions can move from the surface 3b side of the filter layer to the other surface 3a side more readily.

In the filter layer, an elemental composition ratio of a total of sulfo and hydroxyl groups to carbon atoms, which is obtained by X-ray photoelectron spectroscopy (XPS), is preferably 1 to 20 at% (atomic percent). Specifically, in terms of the elemental composition ratio determined by X-ray photoelectron spectroscopy, the content of sulfo and hydroxyl groups to carbon atoms included in the membrane or the aggregation of plural particles constituting the filter layer is preferably not less than 1 at% and not greater than 20 at%. When the ratio is not less than 1 at%, the hydrogen ion conduction can be improved sufficiently. When the ratio is not greater than 20 at%, it is possible to prevent reduction in physical durability of the filter layer due to introduction of sulfo and hydroxyl groups. The elemental composition ratio of the sulfo and hydroxyl groups to carbon atoms in the filter layer is more preferably 1 to 10 at%.

The elemental composition ratio of the total of the sulfo and hydroxyl groups to carbon atoms in the filter layer, which is obtained by X-ray photoelectron spectroscopy, is calculated as follows. First, narrow scanning is performed for each element constituting the filter layer, and the peak area thereof is measured. In the process of measuring the peak area, background correction is performed using Shirley method. The peak area of the C1s spectrum derived from carbon atoms contained in the membrane or aggregation of particles is calculated. Moreover, the peak area of S2p spectrum derived from sulfo groups or the peak area of the O1s spectrum derived from hydroxyl groups are calculated. The total area of the peak areas of the S2p spectrum derived from sulfo groups and the O1s spectrum derived from hydroxyl groups is divided by the peak area of the C1s spectrum derived from carbon atoms contained in the membrane or aggregation of particles. The elemental composition ratio of the sulfo and hydroxyl groups to carbon atoms in the filter layer can be thus obtained.

The method of introducing hydroxyl groups into the filter layer is not particularly limited and is irradiating argon plasma or oxygen plasma onto the surface of the membrane or aggregation of particles, for example. Other examples thereof are sputter etching for the surface of the membrane or aggregation of particles, corona discharge for the surface, exposure of the surface to radioactive ray, exposure of the surface to ultraviolet ray, and immersion in a mixture solution of water and ethanol, isopropyl alcohol, or the like. In the process of exposing the surface of the membrane or aggregation of particles to radioactive ray or ultraviolet ray, it is preferable that alkaline aqueous solution exists on the surface of the membrane.

The method of introducing sulfo groups into the filter layer is not particularly limited. Examples thereof are immersing the membrane or aggregation of particles in an aqueous solution containing sulfuric acid and bringing the surface of the membrane or aggregation of particles in contact with sulfur trioxide gas. Another example thereof includes manufacturing a membrane by polymerization using monomers previously including sulfo groups.

### [Microbial fuel cell]

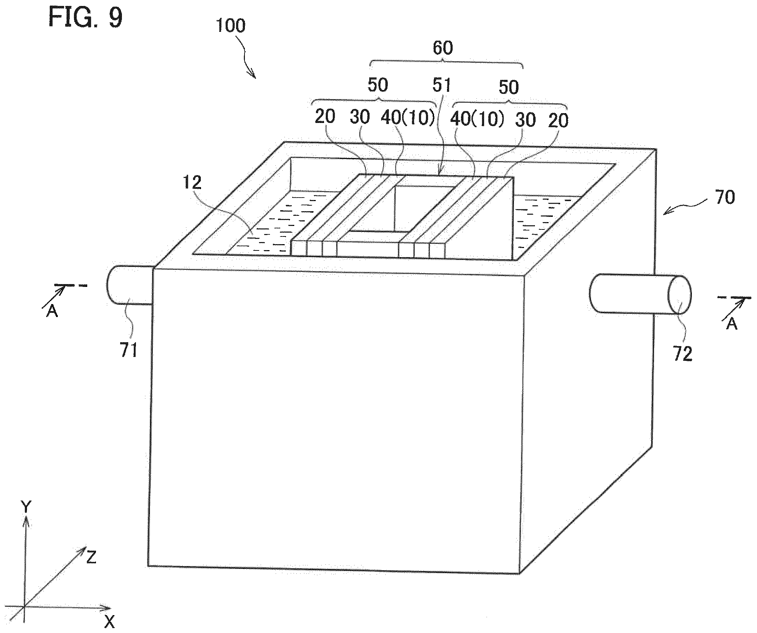

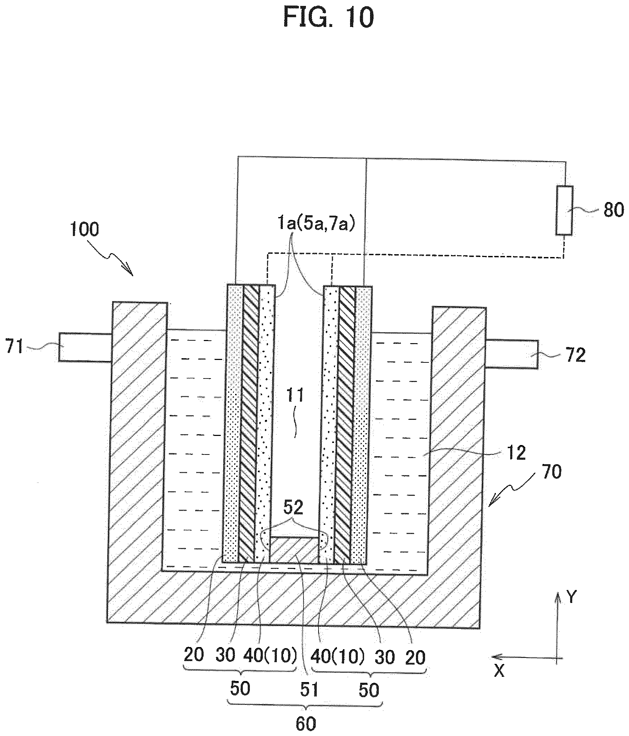

Next, a description is given of a microbial fuel cell according to an embodiment. As illustrated in FIGS. 9 and 10, a microbial fuel cell 100 of the present embodiment includes an anode 20, which supports microorganisms, and a cathode 40, which is composed of one of the aforementioned electrode structures 10, 10A, 10B, 10C, 10D, 10E, 10F, 10G. Preferably, the microbial fuel cell 100 further includes an ion transfer layer 30, which is provided between the cathode 40 and anode 20 and is permeable to hydrogen ions.

### (Anode)

The anode 20 has a structure in which microorganisms are supported on an electroconductive sheet having electric conductivity. The electroconductive sheet can be at least one selected from the group consisting of a porous electroconductive sheet, a sheet of electroconductive woven fabric, and a sheet of electroconductive non-woven fabric. Moreover, the electroconductive sheet may be a laminate of plural sheets. When the electroconductive sheet of the anode 20 is composed of such a sheet including plural pores, hydrogen ions generated by local cell reaction easily move toward the ion transfer layer 30, increasing the rate of the oxygen reduction reaction. In terms of improving the ion permeability, the electroconductive sheet of the anode preferably includes spaces (voids) continuous in the stacking direction X of the electrode structure 10, anode 20, and ion transfer layer 30, that is, the thickness direction.

The electroconductive sheet may be a metal plate including plural through holes extending in the thickness direction. The material constituting the electroconductive sheet of the anode 20 can be at least one selected from the group consisting of electroconductive metal, such as aluminum, copper, stainless steel, nickel, and titanium, carbon paper, and carbon felt.

The electroconductive sheet of the anode 20 may be rolled expanded graphite which can be used in the electric conductor layer 2 of the electrode structure 10. Moreover, it is preferable that the anode 20 contains graphite and graphene layers of the graphite are disposed along the Y-Z plane perpendicular to the stacking direction X of the electrode structure 10, anode 20, and ion transfer layer 30. When the graphene layers are disposed in such a manner, the anode 20 has higher electric conduction in the direction YZ perpendicular to the stacking direction X of the electrode structure 10, anode 20, and ion transfer layer 30 than that in the stacking direction X. This allows electrons generated by the local cell reaction of the anode 20 to be easily transported to the external circuit 80, thus further increasing the cell reaction efficiency.

The microorganisms supported on the anode 20 may be any type of microorganisms that are able to decompose organic matters in the liquid 12 to be treated or compounds containing nitrogen (nitrogen-containing compounds). The microorganisms are preferably anaerobic microorganisms not requiring oxygen to grow, for example. Anaerobic microorganisms do not require air to oxidize and decompose organic matters in the liquid 12 to be treated. It is therefore possible to considerably reduce electric power necessary for feeding air. Moreover, since microorganisms acquire low free energy, the amount of generated sludge is reduced.

The anaerobic microorganisms held by the anode 20 are preferably electricity-producing bacteria having an extracellular electron transfer mechanism, for example. Specifically, examples of such anaerobic microorganisms are Geobacter bacteria, Shewanella bacteria, Aeromonas bacteria, Geothrix bacteria, and Saccharomyces bacteria.

Anaerobic microorganisms may be held on the anode 20 by laying and fixing biofilm containing anaerobic microorganisms on the anode 20. Biofilm generally refers to a three-dimensional structure including bacterial population and extracellular polymeric substance (EPS) produced by the bacterial population. Anaerobic microorganisms may be held on the anode 20 without using biofilm. Anaerobic microorganisms may be held not only on the surface of the anode 20 but also within the anode 20.

### (Ion transfer layer)

The microbial fuel cell 100 of the embodiment includes the ion transfer layer 30 which is permeable to hydrogen ions. The ion transfer layer 30 includes a function of allowing the passage of hydrogen ions generated at the anode 20 and moving the hydrogen ions toward the cathode 40 side. The ion transfer layer 30 is electrically insulating and is provided between the cathode and anode 40 and 20 to exert a function of preventing short circuits thereof.

The ion transfer layer 30 can be an ion exchange membrane composed of ion exchange resin. The ion exchange resin can be NAFION (registered trademark, DuPont), FLEMION (registered trademark, Asahi Glass Co., Ltd.), and SELEMION (registered trademark, Asahi Glass Co., Ltd.), for example.

The ion transfer layer 30 can be porous membrane having pores through which hydrogen ions can penetrate. The ion transfer layer 30 may be a sheet including spaces (voids) through which hydrogen ions move between the anode 20 and cathode 40. Accordingly, the ion transfer layer 30 preferably includes at least one selected from the group consisting of a porous sheet, a woven sheet, and a non-woven sheet. The ion transfer layer 30 can be at least one selected from the group consisting of glass fiber film, synthetic fiber film, and plastic non-woven fabric and may be a laminate of those materials. Such a porous sheet includes a lot of pores inside and allows hydrogen ions to move easily. The pores of the ion transfer layer 30 may have any diameter as long as hydrogen ions can move from the anode 20 to the cathode 40 through the ion transfer layer 30.

As described above, the ion transfer layer 30 has a function of allowing the passage of hydrogen ions generated at the anode 20 and moving the hydrogen ions toward the cathode 40 side. For example, when the cathode 20 is not in contact but is close to the anode 20, hydrogen ions can therefore move from the anode 20 to the cathode 40. Moreover, the filter layer 3, which is electrically insulating as described above, reduces short circuits between the cathode 40 and anode 20. The ion transfer layer 30 is not an essential constituent element in the microbial fuel cell 100 of the embodiment. However, by providing the ion transfer layer 30, hydrogen ions can efficiently move from the anode 20 to the cathode 40. Accordingly, the ion transfer layer 30 is preferably provided in terms of increasing the output power.

### (Cathode)

The microbial fuel cell 100 of the embodiment includes the cathode 40 which is composed of the electrode structure of the first to fifth embodiments. When the cathode 40 is composed of one of the electrode structures 10, 10A, 10B, 10C, 10E, and 10G, which are illustrated in FIGS. 1 to 4, 6, and 8, the ion transfer layer 30 is provided on the surface 3b side of the filter layer 3. When the cathode 40 is composed of one of the electrode structures 10D and 10F, which are illustrated in FIGS. 5 and 7, the ion transfer layer 30 is provided on the surface 6b side of the auxiliary electric conductor 6.

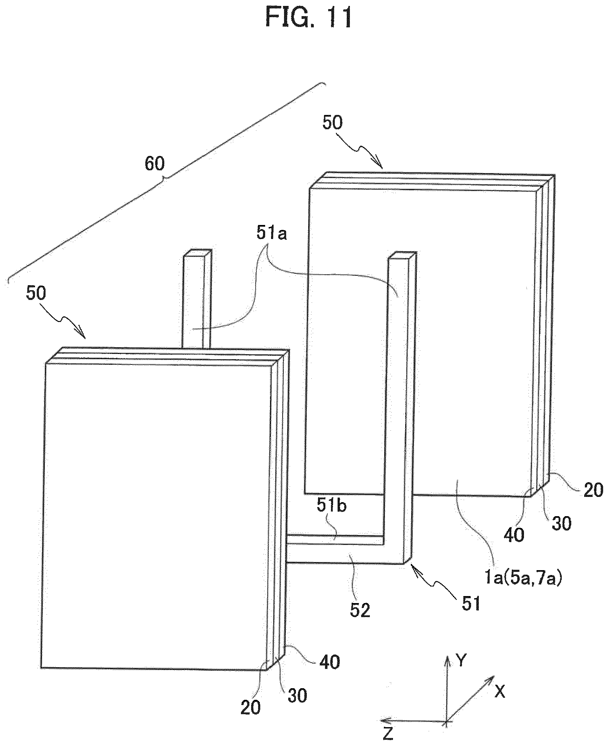

The microbial fuel cell 100 of the embodiment includes plural electrode assemblies 50 each composed of the anode 20, ion transfer layer 30, and cathode 40, as illustrated in FIGS. 9 and 10. As illustrated in FIGS. 10 and 11, the two electrode assemblies 50 are laid on each other with a cassette substrate 51 interposed therebetween so that the surfaces 1a of the water-repellent layers 1 constituting the cathode 40 face each other, the surfaces 5a of the water-repellent electric conductor layers 5, or the surfaces 7a of the diffusion layers 7 face each other. The cassette substrate 51 is composed of a U-shaped frame member extending along the outer periphery of the water-repellent layers 1, the water-repellent electric conductor layer 5 or diffusion layer 7 of the cathode 40. The frame member is opened at the top. In other words, the cassette substrate 51 is a frame member in which the bottom surfaces of two first pillar-shaped members 51a are connected to each other by a second pillar-shaped member 51b. Side surfaces 52 of the cassette substrate 51 are bonded to the outer peripheries of the surfaces 1a of the water-repellent layers 1, the surfaces 5a of the water-repellent electric conductor layers, or the surfaces 7a of the diffusion layers 7. This can prevent the liquid 12 to be treated from leaking into the cassette substrate 51 through the outer peripheries of these surfaces.

As illustrated in FIG. 10, a fuel cell unit 60, which is composed of a stack of the two electrode assemblies 50 and cassette substrate 51, is placed within the wastewater tank 70 so as to form the gas phase 11 communicating with the atmosphere. The wastewater tank 70 holds the liquid 12 to be treated. The anode 20, ion transfer layer 30, and the electric conductor layer 2, filter layer 3, 3A, catalyst layer 4, and auxiliary electric conductor 6 of the cathode 40 are immersed in the liquid 12 to be treated.

As described above, the water-repellent layer 1, water-repellent electric conductor layer 5, and diffusion layer 7 of the cathode 40 have water-repellency. The liquid 12 to be treated held in the wastewater tank 70 is separated from the inside of the cassette substrate 51, and the internal space formed by the two electrode assemblies 50 and cassette substrate 51 corresponds to the gas phase 11. As illustrated in FIG. 10, the cathode 40 and anode 20 are electrically connected to the external circuit 80.

The wastewater tank 70 retains the liquid 12 to be treated inside but may be configured so as to allow the liquid 12 to be treated to flow therethrough. For example, as illustrated in FIGS. 9 and 10, the wastewater tank 70 is provided with a liquid supply port 71, through which the liquid 12 to be treated is supplied to the wastewater tank 70, and a liquid drain port 72, through which the liquid to be treated is discharged from the wastewater tank 70 after treatment.

Preferably, the wastewater tank 70 maintains the anaerobic conditions where there is no molecular oxygen or, if there is molecular oxygen, the concentration of molecular oxygen is extremely low, for example. The liquid 12 to be treated is therefore retained in the wastewater tank 70 so as not to come into contact with oxygen.

Next, a description is given of the operation of the microbial fuel cell 100 of the embodiment. When the microbial fuel cell 100 is in operation, the liquid 12 to be treated containing at least one of organic matters and nitrogen-containing compounds is supplied to the anode 20, and air (or oxygen) is supplied to the cathode 40. In this process, air is continuously supplied through the opening provided at the top of the cassette substrate 51. Preferably, the liquid 12 to be treated is also continuously supplied through the liquid supply port 71 and liquid drain port 72.

When the cathode 40 is composed of the electrode structure 10 or 10A, air is diffused in the water-repellent layer 1 and reaches the oxygen reduction catalyst held in the electric conductor layer 2 or catalyst layer 4. When the cathode 40 is composed of the electrode structure 10B or 10C, air enters the water-repellent electric conductor layer 5 through the surface 5a and reaches the oxygen reduction catalyst held in the water-repellent electric conductor layer 5 or catalyst layer 4. When the cathode 40 is composed of the electrode structure 10D, 10E, 10F, or 10G, air is diffused in the water-repellent layer 1 or 1A and reaches the oxygen reduction catalyst held in the filter layer 3.

In the anode 20, hydrogen ions and electrons are generated from organic matters and/or nitrogen-containing compounds in the liquid 12 to be treated by the catalytic effect of microorganisms. The generated hydrogen ions move through the ion transfer layer 30 toward the cathode 40 side and reach the oxygen reduction catalyst. The generated electrons move through the electroconductive sheet of the anode 20 to the external circuit 80 and further move from the external circuit 80 to the electric conductor layer 2, filter layer 3, water-repellent electric conductor layer 5, or auxiliary electric conductor 6 of the cathode 40 to reach the oxygen reduction catalyst. The hydrogen ions and electrons having reached the oxygen reduction catalyst are combined with oxygen by the effect of the oxygen reduction catalyst into water to be consumed. In this process, the electric energy flowing in the closed circuit is recovered by the external circuit 80.

As described above, the cathode 40 includes the filter layer 3 or 3A including plural through holes with a diameter of 0.01 µm to 0.5 µm. The filter layer 3 or 3A can prevent microorganisms from entering the cathode 40. Accordingly, the cathode 40 does not greatly decrease in catalytic activity and has high durability. The microbial fuel cell 100 has power generation performance prevented from decreasing and is able to stably produce electric energy with high current density.

The anode 20 according to the embodiment may be modified with electron transfer mediator molecules, for example. Alternatively, the liquid 12 to be treated within the wastewater tank 70 may contain electron transfer mediator molecules. This can promote transfer of electrons from anaerobic microorganisms to the anode 20, implementing more efficient liquid treatment.

Specifically, in the metabolic mechanism of anaerobic microorganisms, electrons are exchanged in cells or with terminal electron acceptors. When the mediator molecules are introduced in the liquid 12 to be treated, the mediator molecules operate as terminal electron acceptors of the metabolism and transfer the received electrons to the anode 20. This results in an increase in the rate of oxidative decomposition of organic matters and the like in the liquid 12 to be treated. Such electron transfer mediator molecules are not particularly limited. The electron transfer mediator molecules can be at least one selected from the group consisting of neutral red, anthraquinone-2,6-disulfonate (AQDS), thionine, potassium ferricyanide, and methyl viologen, for example.

The fuel cell unit 60 illustrated in FIGS. 9 and 10 is composed of the two electrode assemblies 50 and cassette substrate 51 laid on each other. However, the embodiment is not limited to the aforementioned configuration. For example, the embodiment may be configured so that the electrode assembly 50 is bonded to only one of the side surfaces 52 of the cassette substrate 51 while the other side surface is sealed with a plate member. The cassette substrate 51 illustrated in FIG. 11 is fully opened at the top. However, the top of the cassette substrate 51 may be partially opened or closed if allowing air (oxygen) to be introduced into the inside.

### [Water treatment apparatus]

Next, a description is given of a water treatment apparatus according to an embodiment. The water treatment apparatus of the embodiment includes an anode 20, which supports microorganisms purifying liquid to be treated, an ion transfer layer 30, which allows the passage of hydrogen ions, and a cathode 40, which is separated from the anode 20 with the ion transfer layer 30 interposed therebetween and is composed of the aforementioned electrode structure 10, 10A, 10B, 10C, 10D, 10E, 10F, or 10G.

As described above, the microbial fuel cell 100 of the embodiment supplies the liquid 12 to be treated containing at least one of an organic matter and a nitrogen-containing compound to the anode 20. By the metabolism of the microorganisms supported on the anode 20, carbon dioxide and nitrogen are produced from organic matters and/or nitrogen-containing compounds together with hydrogen ions and electrons.

Specifically, when the liquid 12 to be treated contains glucose as an organic matter, for example, carbon dioxide, hydrogen ions, and electros are produced by the following local cell reaction.
- Anode 20 (anode): C₆H₁₂O₆ + 6H₂O → 6CO₂ + 24H⁺ + 24e⁻
- Cathode 40 (cathode): 6O₂ + 24H⁺ + 24e⁻ → 12H₂O

When the liquid 12 to be treated contains ammonia as a nitrogen-containing compound, for example, nitrogen, hydrogen ions, and electrons are produced by the following local cell reaction.
- Anode 20 (anode): 4NH₃ → 2N₂ + 12H⁺ + 12e⁻
- Cathode 40 (cathode): 3O₂ + 12H⁺ + 12e⁻ → 6H₂O

As described above, in the water treatment apparatus of the embodiment using the microbial fuel cell 100, organic matters and nitrogen-containing compounds in the liquid 12 to be treated come into contact with the anode 20 for oxidative decomposition, purifying the liquid 12 to be treated. Moreover, as described above, the wastewater tank 70 is provided with the liquid supply port 71, which supplies the liquid 12 to be treated to the wastewater tank 70, and the liquid drain port 72, which discharges the liquid 12 to be treated from the wastewater tank 70. The liquid 12 to be treated can be thereby continuously supplied. This can continuously bring the liquid 12 to be treated into contact with the anode 20, implementing efficient treatment for the liquid 12 to be treated.

Hereinafter, the embodiments are described in more detail using Examples and Comparative Examples. The embodiments are not limited to Examples.

### EXAMPLE 1

In Example 1, a description is given of an effect of the electrode structure according to the first embodiment illustrated in FIG. 2. Reference Examples are not according to the invention.

### [Example 1-1] (Reference Example)

Example 1-1 relates to a microbial fuel cell including an electrode structure having a filter layer with a through hole diameter of 0.4 µm.

First, a polyethylene water-repellent sheet was bonded to an expanded graphite sheet (density: 0.5 g/cm³, thickness: 0.7 mm) as the electric conductor layer using a silicone adhesive. The silicone adhesive was one-component RTV rubber KE-3475-T made by Shin-Etsu Chemical Co., Ltd. The water-repellent sheet was Tyvek (registered trademark) 1073B made by DuPont-Asahi Flash Spun Products Co., Ltd.

Next, the catalyst layer was formed on the surface of the expanded graphite sheet opposite to the surface bonded to the water-repellent sheet. Specifically, the catalyst layer composed of a mixture of the oxygen reduction catalyst and PTFE (by Sigma-Aldrich Co., LLC) was formed by press molding. The catalyst layer was formed so that the weight of the catalyst per unit area was 2.0 mg/cm² while the weight of the binder solid content per unit area was 2.0 mg/cm².

The oxygen reduction catalyst was prepared as follows. First, 3 g of carbon black, 0.1 M of iron (III) chloride aqueous solution, and 0.15 M of pentaethylenehexamine ethanol solution were put in a container, preparing a mixture liquid. The carbon black was Ketjenblack ECP600JD by Lion Specialty Chemicals Co., Ltd. The usage of 0.1 M of iron (III) chloride was adjusted so that the ratio of iron atoms to carbon black was 10 % by mass. To the mixture liquid, ethanol was further added to obtain 9 mL of mixture liquid in total. The obtained mixture liquid was subjected to ultrasonic dispersion and then dried at a temperature of 60 °C with a dryer, preparing a sample containing carbon black, iron (III) chloride, and pentaethylenehexamine.

The sample was put into an end of a quartz tube, and the inside of the quarts tube was replaced with argon. The quarts tube was put into a furnace at 900 °C and taken out after 45 seconds. In the process of inserting the quarts tube in the furnace, inserting the quarts tube into the furnace took three seconds, so that the rate at which the temperature of the sample increased was adjusted to 300 °C/s at the start of heating. Subsequently, argon gas was caused to flow through the quartz tube to cool the sample. The oxygen reduction catalyst was thereby obtained.

On the catalyst layer's side of the laminate of the water-repellent sheet, electric conductor layer, and catalyst layer, the filter layer composed of 20 µm-thick porous polyimide film with a through hole diameter of 0.4 µm was laid, thereby preparing an electrode structure of Example 1-1. The filter layer was sealed at the edge so that the catalyst layer was completely separated from the liquid to be treated.

The microbial fuel cell illustrated in FIGS. 9 and 10 was prepared in which the obtained electrode structure was used as the cathode and carbon felt holding anaerobic microorganisms was used as the anode. The liquid to be treated was simulated sewage containing about 700 mg/L organic carbon in total. The temperature of the liquid to be treated was set to 30 °C. Moreover, the flow rate of the liquid to be treated to the wastewater tank was adjusted so that the hydraulic retention time thereof was 24 hours.

### [Example 1-2] (Reference Example)

Example 1-2 relates to a microbial fuel cell including an electrode structure having a filter layer with a through hole diameter of 0.2 µm.

The microbial fuel cell of Example 1-2 was obtained in a similar manner to Example 1-1 (Reference Example) other than use of the filter layer composed of 20 µm thick porous polyimide film having a through hole diameter of 0.2 µm.

### [Comparative Example 1-1]

Comparative Example 1-1 relates to a microbial fuel cell including an electrode structure having a filter layer with a through hole diameter of 50 µm.

The microbial fuel cell of Comparative Example 1-1 was obtained in a similar manner to Example 1-1 (Reference Example) other than use of the filter layer composed of 20 µm thick porous polyimide film having a through hole diameter of 50 µm.

### [Evaluation]

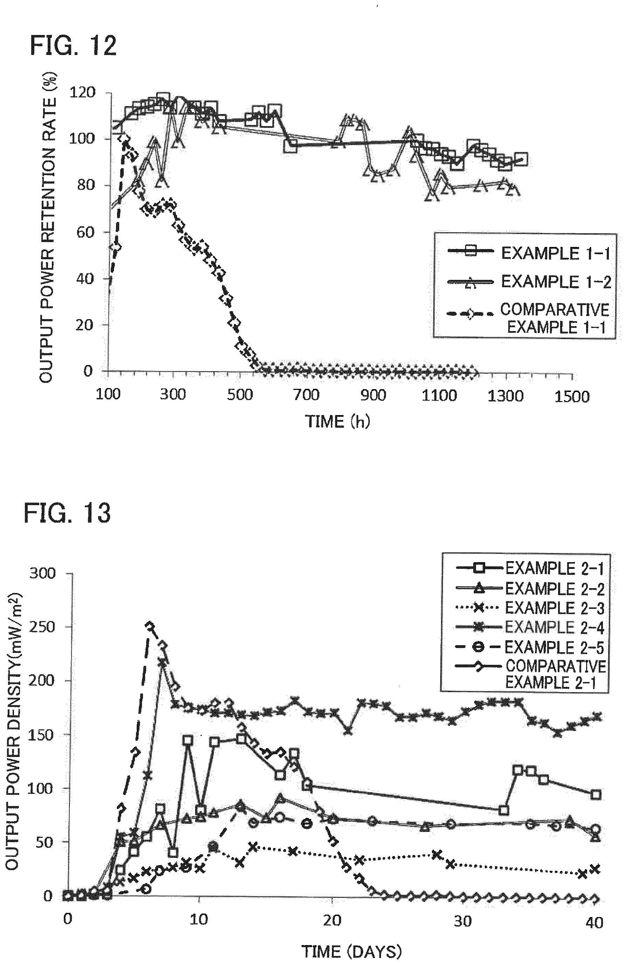

The microbial fuel cells of Examples 1-1 and 1-2 (Reference Examples) and Comparative Example 1-1 were operated, and changes in output power were examined. The evaluation results are illustrated in FIG. 12. FIG. 12 shows that in Examples 1-1 and 1-2 (Reference Examples) with the through hole diameters set not greater than 0.5 µm, the output power of the microbial fuel cell 1300 hours or more after the start up was not less than 80% of the initial output power. On the other hand, in Comparative Example 1-1 with the through hole diameter set to 50 µm, the output power of the microbial fuel cell decreased to substantially zero within about 500 hours after the start up. It is therefore revealed that provision of the filter layer having a through hole diameter of not greater than 0.5 µm allows the output power of the microbial fuel cell to be maintained over a long period of time.

### EXAMPLE 2

In EXAMPLE 2, a description is given of the effect of the electrode structure according to the fifth embodiment which includes sulfo groups and/or hydroxyl groups. Reference Examples are not according to the invention.

### [Example 2-1] (Reference Example)

Example 2-1 relates to a microbial fuel cell including the electrode structure having a filter layer in which the through hole diameter is 0.4 µm; the porosity is 80%; and the elemental composition ratio of hydroxyl groups to carbon atoms measured by X-ray photoelectron spectroscopy is 0.070 (7.0 at%).

First, a polyethylene water-repellent sheet was bonded to an expanded graphite sheet (density: 0.5 g/cm³, thickness: 0.7 mm) as the electric conductor layer using a silicone adhesive. The silicone adhesive and water-repellent sheet were the same as those of Example 1-1.

Next, the catalyst layer was formed on the surface of the expanded graphite sheet opposite to the surface bonded to the water-repellent sheet. Specifically, the catalyst layer composed of a mixture of the oxygen reduction catalyst and PTFE (by Sigma-Aldrich Co., LLC) was formed by press molding. The catalyst layer was formed so that the weight of the catalyst per unit area was 2.0 mg/cm² while the weight of the binder solid content per unit area was 2.0 mg/cm². The oxygen reduction catalyst was the same as that of Example 1.1 (Reference Example).

On the catalyst layer's side of the laminate of the water-repellent sheet, electric conductor layer, and catalyst layer, the filter layer was laid, thereby preparing the electrode structure of Example 2.1 (Reference Example). The filter layer was sealed at the edge so that the catalyst layer was completely separated from the liquid to be treated. The filter layer was composed of a porous polyimide film in which the through hole diameter was 0.4 µm; the thickness was 20 µm; the porosity was 80%; and the content of hydroxyl groups to carbon atoms was 0.070. The hydroxyl groups were formed by immersing the polyimide film in a mixture solution of 20% isopropanol and 80% ion exchange water for 30 minutes.

The microbial fuel cell illustrated in FIGS. 9 and 10 was produced in which the obtained electrode structure was set as the cathode and carbon felt holding anaerobic microorganisms was set as the anode. The liquid to be treated was simulated sewage containing about 700 mg/L organic carbon in total. The temperature of the liquid to be treated was set to 30 °C. Moreover, the flow rate of the liquid to be treated to the wastewater tank was adjusted so that the hydraulic retention time thereof was 24 hours.

The elemental composition ratio of hydroxyl groups to carbon atoms in the filter layer was measured as follows. The measurement was performed under a vacuum condition of 3×10⁻⁸ Pa. The light source of an X-ray photoelectron spectrometer was A1 characteristic X-rays. In the measurement, the filter material was pressed and fixed to In foil. The acceleration voltage was set to 10 kV.

Under such measurement conditions, first, narrow scanning was performed for each element constituting the filter layer to measure the peak area thereof. In the process of measuring the peak area, background correction was performed using Shirley method. The peak area of the C1s spectrum derived from carbon atoms contained in the polyimide film was calculated. Moreover, the peak area of the O1s spectrum derived from hydroxyl groups was calculated. The peak area of the O1s spectrum derived from hydroxyl groups was divided by the peak area of the C1s spectrum derived from carbon atoms contained in the polyimide film, calculating the elemental composition ratio.

### [Example 2-2] (Reference Example)

Example 2-2 relates to a microbial fuel cell including the electrode structure having a filter layer in which the through hole diameter is 0.2 µm; the porosity is 80%; and the elemental composition ratio of hydroxyl groups to carbon atoms measured by X-ray photoelectron spectroscopy is 0.070 (7.0 at%).

The microbial fuel cell was obtained in a similar manner to Example 2-1 (Reference Example) other than use of the filter layer composed of a porous polyimide film in which the through hole diameter was 0.2 µm; the thickness was 20 µm; the porosity was 80%; and the content of hydroxyl groups to carbon atoms was 0.070. The hydroxyl groups were formed by immersing the polyimide film in a mixture solution of 20% isopropanol and 80% ion exchange water for 30 minutes.

### [Example 2-3] (Reference Example)

Example 2-3 relates to a microbial fuel cell including an electrode structure having a filter layer in which the through hole diameter is 0.02 µm; the porosity is 80%; and the elemental composition ratio of hydroxyl groups to carbon atoms measured by X-ray photoelectron spectroscopy is 0.068 (6.8 at%).

The microbial fuel cell was obtained in a similar manner to Example 2-1 (Reference Example) other than use of the filter layer composed of a porous polyimide film in which the through hole diameter was 0.02 µm; the thickness was 20 µm; the porosity was 80%; and the content of hydroxyl groups to carbon atoms was 0.068. The hydroxyl groups were formed by immersing the polyimide film in a mixture solution of 20% isopropanol and 80% ion exchange water for 30 minutes.

### [Example 2-4] (Reference Example)

Example 2-4 relates to a microbial fuel cell including an electrode structure having a filter layer in which the through hole diameter is 0.4 µm and the porosity is 80%. In the filter layer, the elemental composition ratio of sulfo groups to carbon atoms measured by X-ray photoelectron spectroscopy is 0.028 (2.8 at%), and the elemental composition ratio of hydroxyl groups to carbon atoms is 0.061 (6.1 at%).

The microbial fuel cell was obtained in a similar manner to Example 2-1 (Reference Example) other than use of the filter layer composed of a porous polyimide film in which the through hole diameter was 0.4 µm; the thickness was 20 µm; and the porosity was 80%. In the filter layer, the content ratio of sulfo groups to carbon atoms was 0.028, and the content ratio of hydroxyl groups to carbon atoms was 0.061. The sulfo groups and hydroxyl groups were formed in such a manner that the porous polyimide film was immersed in a 80% sulfuric acid aqueous solution for five minutes, washed with water, and dried, followed by immersion in a mixture solution of 20% isopropanol and 80% ion exchange water for 30 minutes.

The elemental composition ratio of sulfo groups to carbon atoms in the filter layer was measured as follows. The measurement conditions for X-ray photoelectron spectroscopy were the same as those of the aforementioned case of hydroxyl groups. Next, in the same manner as described above, narrow scanning was performed for each element constituting the filter layer to measure the peak area thereof. The peak area of the C1s spectrum derived from carbon atoms contained in the polyimide film was calculated. Moreover, the peak area of the S2p spectrum derived from sulfo groups was calculated. The peak area of the S2p spectrum derived from sulfo groups was divided by the peak area of the C1s spectrum derived from carbon atoms contained in the polyimide film, calculating the elemental composition ratio.

### [Example 2-5] (Reference Example)

Example 2-5 (Reference Example) relates to a microbial fuel cell including an electrode structure having a filter layer in which the through hole diameter is 0.4 µm and the porosity is 80%. In the filter layer, the elemental composition ratio of sulfo groups to carbon atoms measured by X-ray photoelectron spectroscopy is 0.016 (1.6 at%), and the elemental composition ratio of hydroxyl groups to carbon atoms is 0.002 (0.2 at%).

The microbial fuel cell was obtained in a similar manner to Example 2-1 (Reference Example) other than use of the filter layer composed of a porous polyimide film in which the through hole diameter was 0.4 µm; the thickness was 20 µm; and the porosity was 80%. In the filter layer, the content ratio of sulfo groups to carbon atoms was 0.016, and the content ratio of hydroxyl groups to carbon atoms was 0.002. The sulfo groups and hydroxyl groups were formed in such a manner that the porous polyimide film was immersed in a 80% sulfuric acid aqueous solution for two minutes and was washed with water, followed by drying.

### [Comparative Example 2-1]

Comparative Example 2-1 relates to a microbial fuel cell including an electrode structure having a filter layer with a through hole diameter of 50 µm.

The microbial fuel cell is obtained in a similar manner to Example 2-1 (Reference Example) other than use of the filter layer composed of 300 µm thick porous polyolefin film with a through hole diameter of 50 µm. In the filter layer of Comparative Example 2-1, the elemental composition ratios of the sulfo groups and hydroxyl groups were tried to be specified by X-ray photoelectron spectroscopy, but any peaks derived from those substituents were not observed.

The materials constituting the filter layer of each example, porosity, film thickness, and through hole diameter of the filter layer, and the elemental composition ratios of sulfo groups and hydroxyl groups to carbon atoms in the polymer constituting the filter layer are summarized in Table 1.

**[Table 1]**

| | Filter Layer Material | Porosity (%) | Film Thickness (µm) | Through Hole Diameter (µm) | Elemental Composition Ratio of Sulfo Groups to Carbon Atoms | Elemental Composition Ratio of Hydroxyl Groups to Carbon Atoms |
|---|---|---|---|---|---|---|
| Example 2-1 | Polyimide | 80 | 20 | 0.4 | - | 0.070 (7.0 at%) |
| Example 2-2 | Polyimide | 80 | 20 | 0.2 | - | 0.070 (7.0 at%) |
| Example 2-3 | Polyimide | 80 | 20 | 0.02 | - | 0.068 (6.8 at%) |
| Example 2-4 | Polyimide | 80 | 20 | 0.4 | 0.028 (2.8 at%) | 0.061 (6.1 at%) |
| Example 2-5 | Polyimide | 80 | 20 | 0.4 | 0.016 (1.6 at%) | 0.002 (0.2 at%) |
| Comparative Example 2-1 | Polyolefin | 90 | 300 | 50 | - | N.D. |

### [Evaluation]

The microbial fuel cells of Examples 2-1 to 2-5 (Reference Examples) and Comparative Example 2-1 were operated, and changes in output power were examined. The evaluation results are illustrated in FIG. 13. As shown in FIG. 13, in Examples 2-1 to 2-5 (Reference Examples) with the through hole diameters set not greater than 0.5 µm, the output power of the microbial fuel cell 40 days after the start up maintained 60% or more of the initial output power. On the other hand, in Comparative Example 2-1 with the through hole diameter set to 50 µm, the output power of the microbial fuel cell decreased to substantially zero within about 22 days after the start up.

When the filter layer contains 1 at% or more of sulfo groups and hydroxyl groups in total, it is possible to prevent the decrease in output power of the microbial fuel cell over time while preventing a large decrease in initial output power. The larger the through hole diameter within 0.5 µm, the higher the initial output power. Moreover, it is confirmed that the initial output power tends to increase with the content of sulfo or hydroxyl groups. It is therefore revealed that, by providing the filter layer having a through hole diameter of not greater than 0.5 µm, the output power of the microbial fuel cell can be maintained over a long period of time. Moreover, it is revealed that the filter layer preferably includes sulfo or hydroxyl groups.

In EXAMPLES 1 and 2, the filter layers were made of porous polyimide film. However, the filter layers are not limited to polyimide film and can be made of polytetrafluoroethylene film or polyvinylidene fluoride film. Similarly to polyimide film, polytetrafluoroethylene film and polyvinylidene fluoride film are both chemically stable and sufficiently resistant to corrosion due to microorganisms. Moreover, polytetrafluoroethylene and polyvinylidene fluoride are relatively easily processed into fibers with a diameter of not greater than 0.5 µm and can provide pores with a through hole diameter of not greater than 0.5 µm with high uniformity. Furthermore, polytetrafluoroethylene and polyvinylidene fluoride are both easily made hydrophilic by using a method such as plasma. Accordingly, polytetrafluoroethylene film and polyvinylidene fluoride film can be used as the filter layer similarly to the polyimide film in EXAMPLES 1 and 2.

### EXAMPLE 3

In Example 3-1, a description is given of an effect of an electrode structure according to the fourth embodiment illustrated in FIG. 8.

### [Example 3-1]

First, carbon black with an average primary particle size of not greater than 40 nm as the carbon particles, polytetrafluoroethylene as the binder, and oxygen reduction catalyst particles were mixed with water, preparing the slurry for aggregation.

Next, the obtained slurry for aggregation was applied to mesh composed of stainless steel (SUS) as the auxiliary electric conductor, followed by drying. The product was subjected to pressure to be compressed, producing the filter layer of Example 3-1.

The produced filter layer was used to form a laminate with a waterproof moisture-permeable sheet as the diffusion layer and a silicone layer as the oxygen permeable layer as illustrated in FIG. 8. The laminate was subjected to pressure to be compressed. Next, the laminate was then dried and baked, producing the cathode of Example 3-1.

Next, the microbial fuel cell illustrated in FIGS. 9 and 10 was prepared by using carbon felt holding anaerobic microorganisms as the anode and polyolefin non-woven fabric as the ion transfer layer. The liquid to be treated was simulated sewage containing about 700 mg/L organic carbon in total. The temperature of the liquid to be treated was set to 30 °C. Moreover, the flow rate of the liquid to be treated to the wastewater tank was adjusted so that the hydraulic retention time thereof was 24 hours.

### [Comparative Example 3-1]

First, mesh of stainless steel (SUS) as the auxiliary electric conductor, which was used in Example 3-1, was caused to support the same amount of oxygen reduction catalyst particles as that of Example 3-1.

Next, the electric conductor with the catalyst particles supported thereon was used to form a laminate with the same waterproof moisture-permeable sheet and silicone layer as those of Example 3-1, producing the cathode of Comparative Example 3-1. The produced cathode and the same anode and ion transfer layer as those of Example 3-1 were used to prepare the microbial fuel cell in a similar manner to Example 3-1. The simulated sewage was the same as that of Example 3-1, and the conditions of the hydraulic retention time of the liquid to be treated were the same as those of Example 3-1. In other words, the microbial fuel cell of Comparative Example 3-1 was the same as the microbial fuel cell of Example 3-1 except that the filter layer was not provided and the catalyst particles were directly supported on the electric conductor.

### [Evaluation]

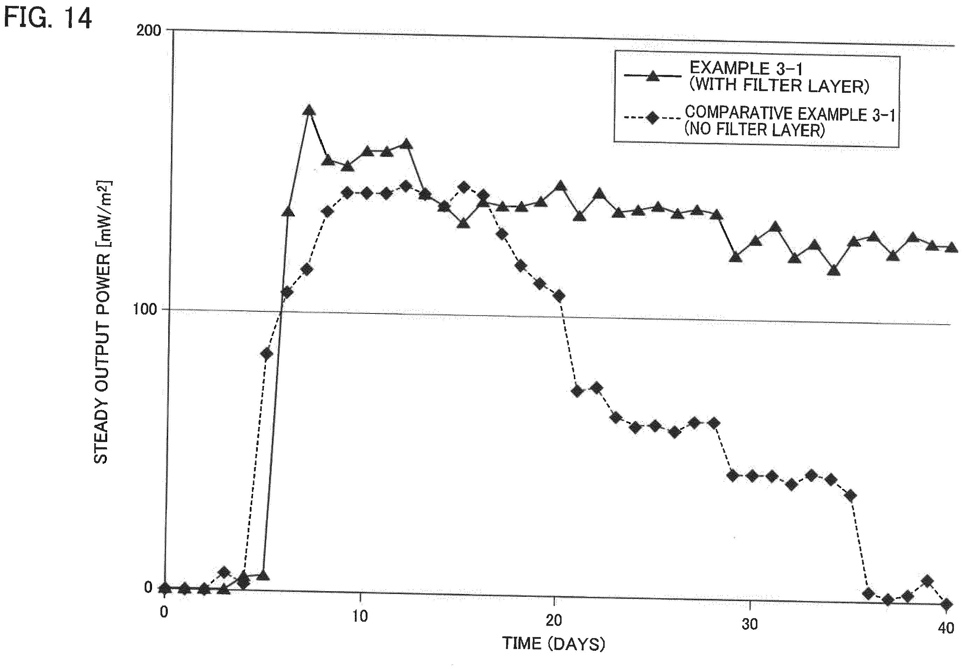

The microbial fuel cells obtained in Example 3-1 and Comparative Example 3-1 were operated for 40 days, and changes in output power characteristics of the microbial fuel cells were examined. The evaluation results are illustrated in FIG. 14. As illustrated in FIG. 14, the maximum output powers of the microbial fuel cells in Example 3-1 and Comparative Example 3-1 were equal. However, in the microbial fuel cell in Comparative Example 3-1, the output power characteristics degraded over time. On the other hand, the output power characteristic of the microbial fuel cell in Example 3-1 did not degrade significantly, and the high output power thereof was maintained even after 40 days. It is therefore revealed that provision of the filter layer allows for stable production of electric energy over a long period of time.

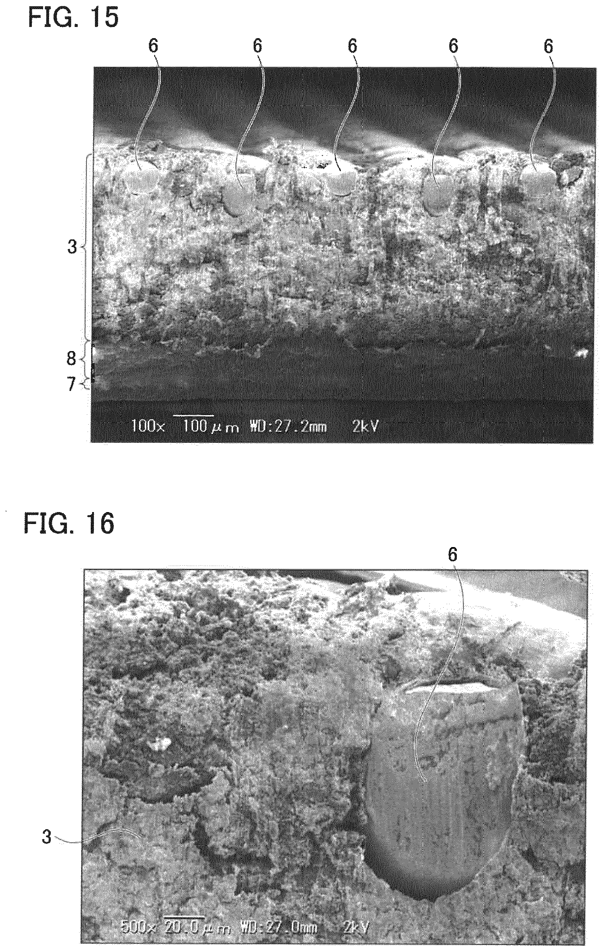

FIG. 15 illustrates scanning electron micrographs of the electrode structure (cathode) used in the microbial fuel cell of Example 3-1. FIG. 16 illustrates an enlarge photograph of the contact between the filter layer 3 and auxiliary electric conductor 6 in FIG. 15. FIGS. 15 and 16 reveal that the diffusion layer 7, oxygen permeable layer 8, and filter layer 3 are stacked in this order and that most part of the auxiliary electric conductor 6 is embedded in the top of the filter layer 3.

Although the present invention has been described above by reference to the embodiments and the example, the present invention is not limited to those.

The electrode structure of the present invention includes the filter layer having fine through holes to prevent microorganisms from entering the electrode structure. Accordingly, the microbial fuel cell is able to produce electric energy stably. Moreover, provision of the filter layer prevents deterioration due to microorganisms adhering to the interior of the electrode structure, thus preventing reduction in power generation performance.

### REFERENCE SIGNS LIST

- 1, 1A: WATER-REPELLENT LAYER
- 2: ELECTRIC CONDUCTOR LAYER
- 3, 3A: FILTER LAYER
- 4: CATALYST LAYER
- 5: WATER-REPELLENT ELECTRIC CONDUCTOR LAYER
- 6: AUXILIARY ELECTRIC CONDUCTOR
- 10, 10A, 10B, 10C, 10D, 10E, 10F, 10G: ELECTRODE STRUCTURE
- 11: GAS PHASE
- 12: LIQUID TO BE TREATED
- 20: ANODE
- 40: CATHODE
- 100: MICROBIAL FUEL CELL

## Claims

1. An electrode structure (10, 10A), comprising:
a water-repellent layer (1) which is permeable to oxygen;
an electric conductor layer (2) which is laid on the water-repellent layer (1) and holds an oxygen reduction catalyst; and
a filter layer (3) which is laid on a surface (2b) of the electric conductor layer (2) on the opposite side to the surface (2a) on which the water-repellent layer (1) is laid, the filter layer (3) including a plurality of through holes having a diameter of 0.01 µm to 0.5 µm,
wherein the filter layer (3) is an aggregation of a plurality of particles of a carbon material.

2. The electrode structure (10, 10A) according to claim 1, wherein the electric conductor layer (2) holds a catalyst layer (4) in at least one surface, the catalyst layer (4) including the oxygen reduction catalyst.

3. The electrode structure (10, 10A) according to claim 1, wherein the oxygen reduction catalyst is held throughout the entire electric conductor layer (2).

4. The electrode structure (10, 10A) according to claim 1, wherein the electric conductor layer (2) is formed of an electroconductive oxygen reduction catalyst.

5. The electrode structure (10, 10A) according to any one of claims 1 to 4, wherein the filter layer (3) is electrically conductive and is permeable to hydrogen ions.

6. An electrode structure (10B, 10C), comprising:
a water-repellent electric conductor layer (5), which is water-repellent and holds an oxygen reduction catalyst, wherein the water-repellent electric conductor layer is composed of a porous body including voids so as to diffuse gas; and
a filter layer (3) which is laid on the water-repellent electric conductor layer (5) and includes a plurality of through holes having a diameter of 0.01 µm to 0.5 µm,
wherein the filter layer (3) is an aggregation of a plurality of particles of a carbon material.

7. An electrode structure (10D, 10E, 10F, 10G), comprising:
a water-repellent layer (1) which is permeable to oxygen;
a filter layer (3A) which is laid on the water-repellent layer (1) and includes a plurality of through holes having a diameter of 0.01 µm to 0.5 µm, wherein the filter layer (3A) is an aggregation of a plurality of particles of a carbon material, and an oxygen reduction catalyst is held in the filter layer (3A); and
an auxiliary electric conductor (6) provided for the filter layer (3A), wherein at least a part of the auxiliary electric conductor (6) is provided within the filter layer (3A), or the auxiliary electric conductor (6) is provided so as to be in contact with a surface (3b) of the filter layer (3A) on an opposite to a surface (3a), which is on the water-repellent layer (1) side.

8. The electrode structure (10D, 10E, 10F, 10G) according to claim 7, wherein the auxiliary electric conductor (6) is in the form of three-dimensional mesh.

9. A microbial fuel cell (100), comprising:
an anode (20) supporting microorganisms; and
a cathode (40) composed of the electrode structure (10, 10A, 10B, 10C, 10D, 10E, 10F, 10G) according to any one of claims 1 to 8.

## Patentansprüche

1. Elektrodenstruktur (10, 10A) umfassend:
eine wasserabweisende Schicht (1), die für Sauerstoff durchlässig ist;
eine elektrische Leiterschicht (2), die auf die wasserabweisende Schicht (1) aufgebracht ist und einen Sauerstoffreduktionskatalysator hält; und
eine Filterschicht (3), die auf einer Oberfläche (2b) der elektrischen Leiterschicht (2) auf der der Oberfläche (2a) gegenüberliegenden Seite, auf der die wasserabweisende Schicht (1) aufgebracht ist, aufgebracht ist, wobei die Filterschicht (3) eine Vielzahl von Durchgangslöchern mit einem Durchmesser von 0,01 µm bis 0,5 µm einschließt,
wobei die Filterschicht (3) eine Aggregation einer Vielzahl von Teilchen aus einem Kohlenstoffmaterial ist.

2. Elektrodenstruktur (10, 10A) nach Anspruch 1, wobei die elektrische Leiterschicht (2) eine Katalysatorschicht (4) in mindestens einer Oberfläche hält, wobei die Katalysatorschicht (4) den Sauerstoffreduktionskatalysator beinhaltet.

3. Elektrodenstruktur (10, 10A) nach Anspruch 1, wobei der Sauerstoffreduktionskatalysator über die gesamte elektrische Leiterschicht (2) gehalten wird.

4. Elektrodenstruktur (10, 10A) nach Anspruch 1, wobei die elektrische Leiterschicht (2) aus einem elektrisch leitfähigen Sauerstoffreduktionskatalysator gebildet ist.

5. Elektrodenstruktur (10, 10A) nach einem der Ansprüche 1 bis 4, wobei die Filterschicht (3) elektrisch leitfähig ist und für Wasserstoffionen durchlässig ist.

6. Elektrodenstruktur (10B, 10C) umfassend:
eine wasserabweisende elektrische Leiterschicht (5), die wasserabweisend ist und einen Sauerstoffreduktionskatalysator hält, wobei die wasserabweisende elektrische Leiterschicht aus einem porösen Körper, einschließend Hohlräume, besteht, um so Gas zu diffundieren; und
eine Filterschicht (3), die auf der wasserabweisenden elektrischen Leiterschicht (5) aufgetragen ist und eine Vielzahl von Durchgangslöchern mit einem Durchmesser von 0,01 µm bis 0,5 µm beinhaltet,
wobei die Filterschicht (3) eine Aggregation einer Vielzahl von Teilchen aus einem Kohlenstoffmaterial ist.

7. Elektrodenstruktur (10D, 10E, 10F, 10G) umfassend:
eine wasserabweisende Schicht (1), die für Sauerstoff durchlässig ist;
eine Filterschicht (3A), die auf der wasserabweisenden Schicht (1) aufgebracht ist und eine Vielzahl von Durchgangslöchern mit einem Durchmesser von 0,01 µm bis 0,5 µm einschließt, wobei die Filterschicht (3A) eine Aggregation aus einer Vielzahl von Teilchen eines Kohlenstoffmaterials ist und ein Sauerstoffreduktionskatalysator in der Filterschicht (3A) gehalten wird; und
einen für die Filterschicht (3A) bereitgestellten elektrischen Hilfsleiter (6), wobei mindestens ein Teil des elektrischen Hilfsleiters (6) innerhalb der Filterschicht (3A) bereitgestellt ist, oder der elektrische Hilfsleiter (6) so bereitgestellt ist, dass er mit einer Oberfläche (3b) der Filterschicht (3A) auf einer einer Oberfläche (3a) gegenüberliegenden Seite, die sich auf der Seite der wasserabweisenden Schicht (1) befindet, in Kontakt ist.

8. Elektrodenstruktur (10D, 10E, 10F, 10G) nach Anspruch 7, wobei der elektrische Hilfsleiter (6) in Form eines dreidimensionalen Netzes vorliegt.

9. Mikrobielle Brennstoffzelle (100) umfassend:
eine Anode (20), die Mikroorganismen trägt; und
eine Kathode (40), die aus der Elektrodenstruktur (10, 10A, 10B, 10C, 10D, 10E, 10F, 10G) nach einem der Ansprüche 1 bis 8 zusammengesetzt ist.

## Revendications

1. Structure d'électrode (10, 10A) comprenant:
une couche hydrofuge (1) perméable à l'oxygène;
une couche conductrice électrique (2) placée sur la couche hydrofuge (1) et qui maintient un catalyseur de réduction d'oxygène; et
une couche filtrante (3) placée sur la surface (2b) de la couche conductrice électrique (2) sur le côté opposé à la surface (2a) sur laquelle la couche hydrofuge (1) est posée, la couche filtrante (3) comprenant une pluralité de trous d'un diamètre allant de 0,01 µm à 0,5 µm,
dans laquelle la couche filtrante (3) est un agrégat d'une pluralité de particules d'une matière carbonée.

2. Structure d'électrode (10, 10A) selon la revendication 1, dans laquelle la couche conductrice électrique (2) maintient une couche de catalyseur (4) dans au moins une surface, la couche de catalyseur (4) comprenant le catalyseur de réduction d'oxygène.

3. Structure d'électrode (10, 10A) selon la revendication 1, dans laquelle le catalyseur de réduction d'oxygène est contenu dans toute la couche conductrice électrique (2).

4. Structure d'électrode (10, 10A) selon la revendication 1, dans laquelle la couche conductrice électrique (2) est formée d'un catalyseur de réduction d'oxygène électroconducteur.

5. Structure d'électrode (10, 10A) selon l'une quelconque des revendications 1 à 4, dans laquelle la couche filtrante (3) est électriquement conductrice et est perméable aux ions hydrogène.

6. Structure d'électrode (10B, 10C), comprenant:
une couche conductrice électrique hydrofuge (5), qui repousse l'eau et maintient un catalyseur de réduction d'oxygène, dans laquelle la couche conductrice électrique hydrofuge est composée d'un corps poreux comprenant des cavités de manière à diffuser du gaz; et
une couche filtrante (3) placée sur la couche conductrice électrique hydrofuge (5) et comprend une pluralité de trous traversants ayant un diamètre allant de 0,01 µm à 0,5 µm,
dans laquelle la couche filtrante (3) est un agrégat d'une pluralité de particules d'une matière carbonée.

7. Structure d'électrode (10D, 10E, 10F, 10G), comprenant:
une couche hydrofuge (1) perméable à l'oxygène;
une couche filtrante (3A) placée sur la couche hydrofuge (1) et qui comprend une pluralité de trous traversants d'un diamètre allant de 0,01 µm à 0,5 µm, dans laquelle la couche filtrante (3A) est un agrégat d'une pluralité de particules d'une matière carbonée, et un catalyseur de réduction d'oxygène est maintenu dans la couche filtrante (3A); et
un conducteur électrique auxiliaire (6) prévu pour la couche filtrante (3A), dans laquelle au moins une partie du conducteur électrique auxiliaire (6) est prévu à l'intérieur de la couche filtrante (3A), ou le conducteur électrique auxiliaire (6) est prévu de manière à être en contact avec la surface (3b) de la couche filtrante (3A) sur un côté opposé à une surface (3a), laquelle est sur le côté de la couche hydrofuge (1).

8. Structure d'électrode (10D, 10E, 10F, 10G) selon la revendication 7, dans laquelle le conducteur électrique auxiliaire (6) est sous forme d'un maillage tridimensionnel.

9. Pile à combustible microbienne (100), comprenant:
une anode (20) supportant des microorganismes; et
une cathode (40) composée de la structure d'électrode (10, 10A, 10B, 10C, 10D, 10E, 10F, 10G) selon l'une quelconque des revendications 1 à 8.
